(19) Europäisches Patentamt / European Patent Office / Office européen des brevets

(11) **EP 4 131 625 A1**

(12) **EUROPEAN PATENT APPLICATION**
published in accordance with Art. 153(4) EPC

(43) Date of publication:
**08.02.2023 Bulletin 2023/06**

(21) Application number: **21779507.9**

(22) Date of filing: **19.03.2021**

(51) International Patent Classification (IPC):
$H01M\ 50/454^{(2021.01)}$     $H01M\ 10/12^{(1974.07)}$
$H01M\ 50/411^{(2021.01)}$     $H01M\ 50/414^{(2021.01)}$
$H01M\ 50/42^{(2021.01)}$      $H01M\ 50/44^{(2021.01)}$
$H01M\ 50/443^{(2021.01)}$     $H01M\ 50/451^{(2021.01)}$
$H01M\ 50/46^{(2021.01)}$      $H01M\ 50/463^{(2021.01)}$
$H01M\ 50/466^{(2021.01)}$     $H01M\ 50/489^{(2021.01)}$

(52) Cooperative Patent Classification (CPC):
H01M 10/12; H01M 50/411; H01M 50/414;
H01M 50/42; H01M 50/44; H01M 50/443;
H01M 50/451; H01M 50/454; H01M 50/46;
H01M 50/463; H01M 50/466; H01M 50/489;
Y02E 60/10; Y02P 70/50

(86) International application number:
**PCT/JP2021/011516**

(87) International publication number:
**WO 2021/200290 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020 JP 2020060528**
**27.07.2020 JP 2020126309**

(71) Applicant: **Asahi Kasei Kabushiki Kaisha
Tokyo 1000006 (JP)**

(72) Inventor: **YAMADA, Kentaro
Tokyo 100-0006 (JP)**

(74) Representative: **Strehl Schübel-Hopf & Partner
Maximilianstrasse 54
80538 München (DE)**

(54) **LEAD STORAGE BATTERY**

(57)     Provided is a lead storage battery provided with a positive electrode, a negative electrode, an electrolytic solution, a separator interposed between the positive electrode and the negative electrode, and non-woven fabric. The non-woven fabric includes fibers and a filler, and is disposed between the positive electrode and the separator. The separator is provided with a rib formed in a protruding shape from a base portion on the positive electrode side. The relation T/R, which is between the thickness T of the non-woven fabric and the height R from the base portion of the separator taken as a starting point to the top of the rib, is 0.10-11.

FIG. 1

EP 4 131 625 A1

**Description**

FIELD

The present invention relates to a lead storage battery.

BACKGROUND

Lead storage batteries are widely utilized worldwide in the on-vehicle applications (e.g., passenger cars, buses, trucks, motorcycles, and golf carts), the industrial applications (e.g., forklifts, agricultural machines, trains, uninterruptible power supplies (UPS), and communication equipment) and the like. Particularly, in the on-vehicle applications, Idling-Start-and-Stop vehicles (hereinafter, simply referred to as "ISS vehicles") in which the engine is turned off during a stop at a traffic light, a traffic jam, or the like have been actively developed for the purposes of, for example, complying with the recent carbon dioxide emission control measures and improving the fuel efficiency.

During an idling stop, no power is generated by an alternator. However, since air conditioner, audio system, lamps, and the like keep operating even during an idling stop, a lead storage battery needs to supply electric power to such electrical components, and this leads to an increase in the depth of discharge of the lead storage battery. In addition, since the time of charging of the lead storage battery by power generation of the alternator is shortened, the lead storage battery continues to operate in Partial State of Charge (hereinafter, abbreviated as "PSoC").

When a lead storage battery is repeatedly charged and discharged in PSoC, a degradation mode of the lead storage battery is facilitated due to a phenomenon called stratification. Since PSoC is maintained in ISS vehicles, inhibition of stratification is an important problem in the development of a lead storage battery for ISS vehicle application.

Further, a lead storage battery used in an ISS vehicle is frequently and repeatedly charged and discharged. Charging and discharging of the lead storage battery involve swelling and/or shrinking of electrode plates, causing a reduction in the capacity due to detachment of active material. Generally, it is known that the detachment of active material caused by repeated charging and discharging occurs prominently on a positive electrode, and inhibition of the detachment of positive electrode active material is thus an important problem in the development of a lead storage battery for ISS vehicle application.

As separators for lead storage batteries, glass fiber nonwoven fabrics called Absorbed Glass Mats (AGM) are widely known. Such separators have a high capacity of inhibiting stratification caused by charging and discharging of a lead storage battery. In addition, glass mats that are coarser glass fiber nonwoven fabrics are known to have a high capacity of inhibiting the detachment of active material caused by charging and discharging of a lead storage battery.

PTL 1 proposes to inhibit stratification by arranging a separator and a fiber mat between a positive electrode and a negative electrode with the fiber mat being in contact with the negative electrode.

[CITATION LIST]

[PATENT LITERATURES]

[PTL 1] WO2019/087679

SUMMARY

[TECHNICAL PROBLEM]

The technology disclosed in PTL 1, however, places a focus on inhibiting the detachment of positive electrode active material by ribs formed on the separator, and the effect of inhibiting the detachment of positive electrode active material or stratification by the use of a nonwoven fabric is not examined. Therefore, in the technology disclosed in PTL 1, it is believed that the structure of the lead storage battery is not optimized for the inhibition of the detachment of positive electrode active material or stratification, and the life performance of the lead storage battery in ISS vehicle application is insufficient.

The present invention was made in view of the above-described circumstances, and an object of the present invention is to provide a lead storage battery that exhibits excellent PSoC cycle life performance.

[SOLUTION TO PROBLEM]

The above-described problems are solved by the following technical means.

[1] A lead storage battery, including:

a positive electrode;
a negative electrode;
a separator interposed between the positive electrode and the negative electrode; and
a nonwoven fabric that is arranged between the positive electrode and the separator, and contains fibers and a filler,
wherein
the separator includes ribs each formed in a convex shape from a base portion on the side of the positive electrode, and
a thickness T of the nonwoven fabric and a height R from the base portion taken as a reference point to a top of the ribs have a relationship T/R of 0.10 to 11.

[2] The lead storage battery according to [1], wherein the nonwoven fabric has a mean flow pore size of 25 $\mu$m or smaller.

[3] The lead storage battery according to [1] or [2], wherein the nonwoven fabric has a mean flow pore size of 0.05 $\mu$m or larger.

[4] The lead storage battery according to any one of [1] to [3], wherein, when the area of convex portions is defined as A and the area of the base portion is defined as B in an effective range of the separator in a plan view, A/(A + B) is 0.01 to 0.4.

[5] The lead storage battery according to any one of [1] to [4], wherein the nonwoven fabric has a maximum pore size of 30 $\mu$m or smaller.

[6] The lead storage battery according to any one of [1] to [5], wherein the nonwoven fabric has a maximum pore size of 0.5 $\mu$m or larger.

[7] The lead storage battery according to any one of [1] to [6], wherein the thickness of the nonwoven fabric is 100 $\mu$m or larger.

[8] The lead storage battery according to any one of [1] to [7], wherein the thickness of the nonwoven fabric is 100 $\mu$m to 1,300 $\mu$m.

[9] The lead storage battery according to any one of [1] to [8], wherein the nonwoven fabric contains an acrylic resin and/or a styrene resin.

[10] The lead storage battery according to [9], wherein the acrylic resin and (or) the styrene resin comprise(s) a silane compound.

[11] The lead storage battery according to [10], wherein the content of silicon (Si) in the silane compound is more than 0 parts by weight but 6 parts by weight or less with respect to 100 parts by weight of the acrylic resin and/or the styrene resin.

[12] The lead storage battery according to any one of [1] to [11], wherein

the separator is a porous membrane, and
the porous membrane contains at least one kind of ribs selected from the group consisting of serrated ribs, inclined ribs, broken ribs, linear ribs, embossments, projections, and a combination thereof.

[13] The lead storage battery according to any one of [1] to [12], wherein the separator is in the form of an envelope, and houses the positive electrode or the negative electrode.

[14] The lead storage battery according to any one of [1] to [13], wherein the separator houses the negative electrode.

[15] The lead storage battery according to any one of [1] to [13], wherein the separator houses the positive electrode.

[16] The lead storage battery according to any one of [1] to [15], wherein the fibers contain organic fibers.

[17] The lead storage battery according to any one of [1] to [16], wherein the filler contains inorganic particles.

[ADVANTAGEIOUS EFFECTS OF INVENTION]

According to the present invention, a lead storage battery that exhibits excellent PSoC cycle life performance can be provided.

BRIEF DESCRIPTION OF DRAWINGS

FIG. 1 is a schematic perspective view that illustrates a configuration of the lead storage battery according to one embodiment of the present invention.

FIG. 2 is a schematic cross-sectional view of an electrode plate group of the lead storage battery according to one embodiment of the present invention.

FIG. 3 provides schematic drawings that illustrate one example of a configuration of electrode plates in the lead storage battery according to one embodiment of the present invention, particularly a configuration in which a positive electrode is housed in a separator, and FIG. 3(a) and FIG. 3(b) are a perspective view and a cross-sectional view of the configuration, respectively.

FIG. 4 provides schematic drawings that illustrate another example of a configuration of electrode plates in the lead storage battery according to one embodiment of the present invention, particularly a configuration in which a negative electrode is housed in a separator, and FIG. 4(a) and FIG. 4(b) are a perspective view and a cross-sectional view of the configuration, respectively.

FIG. 5 is a schematic top view that illustrates physical constituent elements of the separator according to one embodiment of the present invention.

FIG. 6 is a schematic cross-sectional view of the separator according to one embodiment of the present invention.

DESCRIPTION OF EMBODIMENTS

Modes of carrying out the present invention (hereinafter, each simply referred to as "embodiment") will now be described in detail. It is noted here, however, that the present invention is not limited to the below-described embodiments and can be carried out with various modifications within the scope of the gist of present invention. Unless otherwise specified, various numerical values provided below are measured by the respective methods described in the section of Examples.

<<Lead Storage Battery>>

The lead storage battery of the present invention includes: a positive electrode; a negative electrode; a separator interposed between the positive electrode and the negative electrode; and a nonwoven fabric arranged between the positive electrode and the negative electrode. A positive electrode grid constituting the positive electrode may be made of lead or a lead alloy, and a positive electrode active material may be lead oxide, such as lead dioxide. A negative electrode grid constituting the negative electrode may be made of lead or a lead alloy, a negative electrode active material may be lead, and such a lead negative electrode may take, for example, a sponge-like form. Further, the active materials of the positive electrode and the negative electrode may contain other metal elements in the above-described respective compositions.

The separator arranged between the positive electrode and the negative electrode is preferably a membrane body that has an insulating property and an ionic conductivity. The nonwoven fabric arranged between the positive electrode and the separator contains fibers and a filler, and the nonwoven fabric is preferably a membrane body that contains fibers and a filler. Further, in the present embodiment, from the viewpoint of the PSoC cycle life and the inhibition of stratification, it is preferred that the separator and the nonwoven fabric exist between the positive electrode and the negative electrode, and that the nonwoven fabric exist between the positive electrode and the separator. The separator and the nonwoven fabric may be a laminate of two layers, or may take a multi-layer form of three or more layers. The multi-layer form of three or more layers includes at least the separator and the nonwoven fabric according to the present embodiment as specific two layers, and other layers can be selected from any membrane bodies.

The lead storage battery according to the present embodiment may contain dilute sulfuric acid having a specific gravity of 1.1 to 1.4 as an electrolyte solution, and may further contain additives. As an additive, from the viewpoint of inhibiting sulfation, the lead storage battery may contain aluminum ions. Examples of other additives include: metal ions, such as lithium ions and sodium ions; and sources of these metal ions.

In the lead storage battery according to the present embodiment, detachment of the positive electrode active material or stratification is inhibited during repeated charging and discharging in PSoC, so that excellent cycle life performance is obtained. The lead storage battery according to the present embodiment can be used as both an open-type lead storage battery and a valve-regulated lead storage battery.

A configuration of a lead storage battery to which the present invention is applied will now be described.

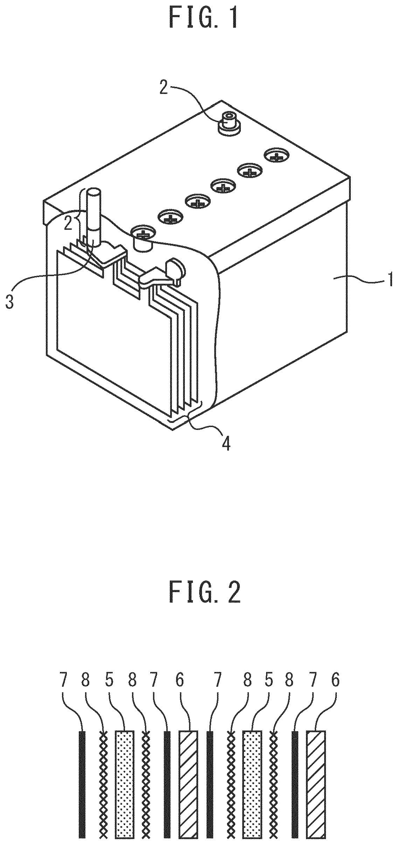

FIG. 1 is a schematic perspective view that illustrates one example of the overall configuration of the lead storage battery of the present invention. In FIG. 1, the lead storage battery includes a battery case 1 and terminals 2 as an exterior package. Inside the battery case 1, electrode pillars 3 and an electrode group (electrode plate group) 4 are housed. The electrode pillars 3 connect the terminals 2 with the electrode group 4. In addition, the above-described dilute sulfuric acid is filled into the battery case 1 as an electrolyte solution, and the electrode group 4 is immersed therein.

FIG. 2 is a schematic cross-sectional view that illustrates one example of a portion of the electrode group in the lead storage battery of the present invention. The electrode group 4 includes: positive electrodes 5 which contain lead or a lead alloy as a grid, and lead oxide (e.g., lead dioxide) as an active material; negative electrodes 6 which contain lead or a lead alloy as a grid, and lead (e.g., spongy lead) as an active material; separators 7 which are arranged between the respective positive electrodes 5 and negative electrodes 6; and nonwoven fabrics 8 which are arranged between the respective positive electrodes 5 and separators 7. The plate-like positive electrodes 5 and negative electrodes 6 are configured such that they are laminated via the separators 7 and the nonwoven fabrics 8, and these members constitute the electrode group 4. The electrode group 4 is housed in the battery case 1 and immersed in the electrolyte solution composed of dilute sulfuric acid to constitute the lead storage battery.

The separator according to the present invention can be used in the form of a sheet. However, from the viewpoint of inhibiting an electrical short circuit between a positive electrode and a negative electrode caused by an active material that may be deposited on the bottom of the battery case, the separator is preferably used in the form of an envelope.

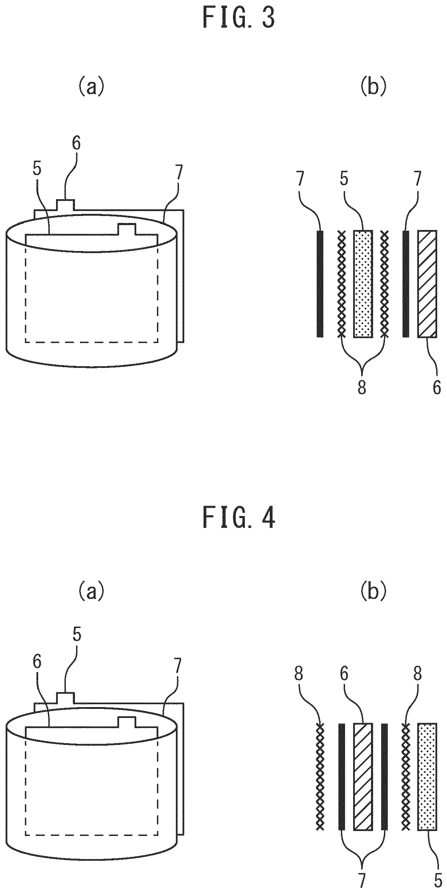

FIG. 3 provides one example of a schematic view that illustrates a pair of the positive electrode and the negative electrode included in the electrode group of FIG. 2. In FIG. 3(a), the separator 7 is in the form of an envelope, and houses the positive electrode 5. FIG. 3(a) does not illustrate the nonwoven fabric 8; however, as illustrated in the schematic cross-sectional view of FIG. 3(b), the nonwoven fabric 8 is arranged between the positive electrode 5 and the separator 7. As for the use form of the nonwoven fabric 8, for example, the nonwoven fabric 8 can be used in any form of a sheet, an envelope, and the like.

When the separator 7 is used in the form of an envelope, the negative electrode 6 may be housed therein. FIG. 4 provides another example of a schematic view that illustrates a pair of the negative electrode and the positive electrode included in the electrode group of FIG. 2. In FIG. 4(a), the separator 7 is in the form of an envelope, and houses the negative electrode 6. FIG. 4(a) does not illustrate the nonwoven fabric 8; however, as illustrated in the schematic cross-sectional view of FIG. 4(b), the nonwoven fabric 8 is arranged on the opposite side of the surface of the separator 7 that faces the negative electrode 6. The use form of the nonwoven fabric 8 is not particularly limited as long as it is arranged on the opposite side of the surface of the separator 7 that faces the negative electrode 6 and, for example, the nonwoven fabric 8 can be used in any form of a sheet, an envelope, and the like.

<<Separator>>

The separator according to the present embodiment, which is arranged between a positive electrode and a negative electrode, is microporous so that it allows ions to pass therethrough and inhibits an electrical short circuit. The separator according to the present embodiment has a smaller maximum pore size than the below-described nonwoven fabric. From the viewpoint of inhibiting an electrical short circuit, the maximum pore size of the separator is preferably 500 nm or smaller, more preferably 400 nm or smaller, still more preferably 300 nm or smaller, yet still more preferably 200 nm or smaller, particularly preferably 150 nm or smaller.

<Separator Material>

The separator is preferably a porous membrane produced from a natural or synthetic material. Examples of a material of the porous membrane include polyolefins, phenolic resins, natural or synthetic rubbers, synthetic wood pulp (SWP), glass fibers, synthetic fibers, cellulose fibers, and combinations of these materials.

More preferably, the separator includes a microporous membrane produced from a thermoplastic polymer. Examples of the thermoplastic polymer include all acid-resistant thermoplastic materials that are suitable for the use in a lead storage battery. A preferred thermoplastic polymer is, for example, a polyvinyl or a polyolefin.

Examples of the polyvinyl include polyvinyl chlorides (PVC).

Examples of the polyolefin include polyethylenes, ethylene-butene copolymers, and polypropylenes. Thereamong, a polyethylene is preferred, a high-molecular-weight polyethylene having a molecular weight of at least 600,000 (measured by viscometry and calculated by the Margolie equation) is more preferred, and an ultrahigh-molecular-weight polyethylene (UHMWPE) is still more preferred.

In the present specification, a UHMWPE has a molecular weight, which is measured by viscometry and calculated by the Margolie equation, of at least 1,000,000, a standard load melt index (measured as prescribed in ASTM D1238 (Condition E) with a standard load of 2,160 g) of substantially zero (0), and a viscosity number (measured at 130°C in a solution containing 0.02 g of a polyolefin in 100 g of decalin) of 600 ml/g or larger. The molecular weight of the UHMWPE is preferably higher than 4,000,000, more preferably 5,000,000 to 8,000,000. Further, the viscosity number of the UHMWPE is preferably 1,000 ml/g or larger, more preferably 2,000 ml/g or larger, most preferably 3,000 ml/g or larger.

Still more preferably, the separator is a microporous membrane containing a UHMWPE and a filler (appropriate fillers are described below), and can be produced by mixing the filler, the UHMWPE, a thermoplastic polymer such as a natural rubber and/or a synthetic rubber, and a plasticizer for processing (e.g., a process oil) using an extruder.

In a specific embodiment, a porous membrane or microporous membrane to be used as the separator can be produced by formulating:

about 5 to 15% by weight of a polymer, or about 10% by weight of a polymer;
about 10 to 75% by weight of a filler, or about 30% by weight of a filler; and
about 10 to 85% by weight of a process oil, or about 60% by weight of a process oil.

In another embodiment, the filler content ratio can be reduced from the above-described value, and the oil content ratio can be set higher than 60% by weight, for example, higher than about 61% by weight, 62% by weight, 63% by weight, 64% by weight, 65% by weight, 66% by weight, 67% by weight, 68% by weight, 69% by weight, or 70% by weight.

In a specific embodiment, a filler-to-polymer ratio (filler:polymer, based on weight) may be in the following specified range, i.e., 2:1, 2.5:1, 3:1, 3.5:1, 4.0:1, 4.5:1, 5.0:1, 5.5:1, or 6:1, or 2 to 5.5:1, 2.5 to 5.0:1, or 3.0 to 4.5:1.

In another embodiment, the filler-to-polymer ratio (filler:polymer, based on weight) may be about 1.5:1 to about 6:1, 2:1 to 6:1, about 2:1 to 5:1, about 2:1 to 4:1, or about 2:1 to about 3:1.

In the porous membrane or microporous membrane, the amounts of a filler, an oil, a polymer (e.g., polyethylene), and a natural rubber and/or a synthetic rubber can be balanced in accordance with the operability, the electrical resistance (ER), the porosity, the physical strength, the torsion, and other desired separator properties.

According to one embodiment, the porous membrane used as the separator may contain a ultrahigh-molecular-weight polyethylene (UHMWPE) mixed with a process oil and a precipitated silica.

According to another embodiment, the microporous membrane used as the separator may contain a UHMWPE mixed with a process oil, additives, and a precipitated silica. The additives may include an additive or reagent that is commonly used in the separator art (e.g., a wetting agent, a colorant, an antistatic agent, a surfactant, or an analog thereof), and can be mixed with the UHMWPE in an amount known as a trace amount in the separator art.

When the separator includes a polymer-containing microporous membrane as a layer, a composition used for the formation of the polymer-containing microporous membrane can be a homogeneous mixture containing 80 to 100% by volume of a polyolefin, 0 to 40% by volume of a plasticizer, and 0 to 92% by volume of a filler. The filler may be dried and pulverized in advance. Appropriate filler materials are described below. The plasticizer is preferably petroleum. The plasticizer is useful for imparting a porosity to a battery separator since it is a component that can be easily removed from a polymer-filler-plasticizer composition.

In some embodiments, a microporous membrane can be obtained by the following production process. First, a microporous membrane may be produced by mixing about 30% by weight of a filler with about 10% by weight of a UHMWPE and about 60% by weight of a process oil using an extruder. These components are passed through the extruder that has been heated, and an extrusion product is generated by the extruder. The thus generated extrusion product is passed through a die and nip rolls consisting of two heated calender rolls to generate a continuous web. Subsequently, a substantial amount of the process oil is extracted from the web using a solvent, and this web is dried and then slit into lanes of a prescribed width, after which the lanes are wound on a roll, whereby a microporous membrane can be produced. The calender rolls are engraved with various groove patterns so that the resulting membrane can be imparted with ribs, serrated edges (serrations), embossments, and the like. Alternatively or additionally, the membrane obtained above as an extrusion product may be passed through an appropriately engraved additional calender roll, embossing roll, or press to impart the resulting microporous membrane with ribs and the like.

Examples of a filler appropriate for the separator include silica, alumina, talc, and a combination thereof. Thereamong, the filler is preferably silica, more preferably a dried and pulverized silica. In the production of a lead storage battery separator of the type described in the present specification, a silica that exhibits a relatively high level of oil absorption and has a relatively high level of affinity for mineral oils can be dispersed in a desirable manner in a mixture of a polyolefin (e.g., polyethylene) and a mineral oil. In addition, the silica used in the present specification may be a precipitated silica and/or an amorphous silica.

In some embodiments, the filler has an average particle size of 25 $\mu$m or smaller, 22 $\mu$m or smaller, 20 $\mu$m, 18 $\mu$m, 15 $\mu$m, or 10 $\mu$m. When the filler is in the form of particles, the average particle size of the filler particles can be adjusted to be 10 to 25 $\mu$m as desired.

When the filler is silica particles, the particle size of the silica particles contributes to the oil absorbing property of the silica and/or the surface area of the silica as a filler; therefore, the silica particles contained in a final product or the separator may have an average particle size in the above-described range. However, the silica initially used as a raw material in the separator production process may be obtained as one or more agglomerates and/or aggregates that can have a size of about 200 $\mu$m or larger.

The microporous membrane produced from a composition containing a polyethylene, a filler, a natural rubber, and/or a synthetic rubber in the above-described manner typically contains a residual oil component. The natural rubber and the synthetic rubber are described below.

In one embodiment, the residual oil component accounts for about 0.5% to about 40% of a total weight of the separator membrane.

In another embodiment, a ratio of the residual oil component is about 10 to 30% or about 20 to 30% of a total weight of the separator membrane.

In some embodiments, the separator is in the form of a sheet, and has an oil content ratio in a range of about 0.5% to about 40% with respect to the weight of a separator sheet product. The separator may contain about 10% to about 30% of residual process oil in some cases, or may contain about 20% to about 30% of residual process oil or residual oil in other cases.

In a specific embodiment, the residual oil component in the separator may be partially or entirely replaced with an additive that improves a wide range of performance, such as a surfactant having a hydrophilic-lipophilic balance (HLB) of less than 6, or a nonionic surfactant. For example, the additive such as a nonionic surfactant contains a residual oil component in an amount ranging from 0.5% or less to the entirety of a total weight of the microporous membrane (e.g., up to 20%, 30%, or 40%), and the residual oil in the separator membrane may be partially or completely replaced with the additive.

The separator disclosed in the present specification may contain a natural rubber, a synthetic rubber, or a mixture of two or more kinds thereof. Examples of the natural rubber include blends of one or more polyisoprenes. Examples of the synthetic rubber include methyl rubbers, polybutadienes, chloroprene rubbers, butyl rubbers, bromobutyl rubbers, polyurethane rubbers, epichlorohydrin rubbers, polysulfide rubbers, chlorosulfonyl polyethylenes, norbornene rubbers, acrylate rubbers, fluororubbers, silicone rubbers, and copolymer rubbers such as styrene-butadiene rubbers, acrylonitrile-butadiene rubbers, ethylene-propylene rubbers (EPM and EPDM), and ethylene-vinyl acetate rubbers. The rubber may be a crosslinked rubber or a non-crosslinked rubber and, in a specific preferred embodiment, the rubber is a non-crosslinked rubber.

In a specific embodiment, the rubber may be a blend of a crosslinked rubber and a non-crosslinked rubber. The rubber can exist in the separator in an amount of at least about 1% by weight, 2% by weight, 3% by weight, 4% by weight, 5% by weight, 6% by weight, 7% by weight, 8% by weight, 9% by weight, or 10% by weight, with respect to the weight of the separator (e.g., the weight of a polyolefin separator sheet, or the weight of a rubber-containing layer).

In another embodiment, the rubber can exist in an amount of 1 to 20% by weight, 2 to 20% by weight, 2.5 to 15% by weight, 2.5 to 12.5% by weight, 2.5 to 10% by weight, or 5 to 10% by weight, with respect to the weight of the separator.

For the purpose of improving the performance of the lead storage battery (e.g., improvement of the oxidation resistance, improvement of the wettability, reduction of black residues, improvement of the surface conductivity, enhancement of the rigidity, and/or improvement of the resistance to metal contaminant-induced oxidation), for example, functionalization, coating, and/or a treatment for adding a material, a function, and/or a layer may be carried out on the surface of the separator disclosed in the present specification. The material, function, and/or layer can be applied to the surface by die coating, spray coating, dip coating, knife coating, curtain coating, gravure coating, physical vapor deposition, atomic layer deposition, chemical vapor deposition, or the like. For example, silica, fumed silica, silicon oxide, alumina, aluminum oxide, a metal, a metal oxide, cellulose, carbon, and a conductive carbon material (e.g., acetylene black or furnace black) may be applied to the separator surface. For example, one surface of the separator may be coated with the above-described conductive carbon material, and a nonwoven fabric may be arranged on the opposite surface.

<Method of Producing Separator>

For the production of the separator according to the present embodiment, a rubber may be incorporated into an extruder along with a polymer (e.g., polyethylene) and a filler (e.g., silica), as well as a process oil and/or a plasticizer.

In another embodiment, a liquid slurry that contains a rubber and, as required, materials such as silica and water is prepared, and one or both sides of a microporous membrane such as a polyethylene membrane, preferably the side facing a negative electrode, is coated with the liquid slurry, after which the liquid slurry may be dried and, as desired, a thin film of the above-described materials may be further formed on the surface of the microporous membrane. Alternatively, a thin film of the above-described materials may be formed on the surface of the microporous membrane, without the method thereof being limited to coating with the liquid slurry and subsequent drying. In order to obtain a more favorable wettability of the film or layer formed from these materials, a known wetting agent may be added to the slurry to be used for a lead storage battery.

In a specific embodiment, the slurry may also contain one or more of the above-exemplified additives. When such an additive-containing slurry is applied and dried onto one or both sides of a microporous membrane and this is followed by formation of an additive-containing porous layer and/or thin film on the resulting separator surface, the layer and/or thin film does not cause any increase in the electrical resistance or causes only a slight increase in the electrical resistance, despite adhering to the microporous membrane extremely well.

In addition, after a separator is obtained by adding a rubber to the slurry, the separator may be further pressed using any of a press, a calender stack, and a roll. The press or the calender stack may be engraved to impart the separator with ribs, grooves, serrated edges, serrated ribs, embossments, and the like.

<Ribs>

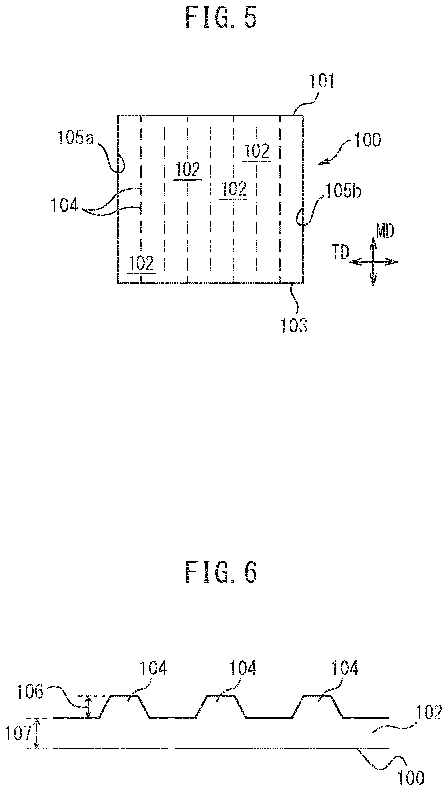

The separator according to the present embodiment has ribs on the positive electrode side when arranged in the lead storage battery. FIG. 5 is a schematic top view that illustrates one example of the separator according to the present embodiment. A separator 100 includes: an upper edge 101; a lower edge 103; and side edges 105a and 105b. In FIG. 5, the upper surface of the separator is depicted along the machine direction ("MD") and the direction perpendicular thereto (transverse direction; "TD"). The separator according to the present embodiment may include: a backweb 102, which is a porous or microporous membrane; and a series of positive-electrode-side ribs 104 that extend from the backweb 102 and are arranged preferably in the longitudinal direction of the separator, i.e. MD. As illustrated, the positive-electrode-side ribs 104 may be serrated. In another embodiment (not illustrated), the positive-electrode-side ribs may be, for example, grooves, textured regions, battlemented (battlement-like) ribs, broken ribs, inclined ribs, linear ribs, curved or sinusoidal ribs, zigzag ribs, embossments, dimples, or any combination thereof. The positive-electrode-side ribs may extend from prescribed regions of the backweb, and/or may extend to other regions of the backweb.

In one embodiment, the positive-electrode-side ribs may be arranged at an angle of larger than 0° but smaller than 180°, or larger than 180° but smaller than 360°, with respect to the side edges in a top view. Further, when ribs are also formed on the negative electrode side of the separator in the lead storage battery, such negative-electrode-side cross ribs may be arranged on a second surface of the separator, substantially parallel to the upper edge (i.e., TD) of the separator.

In the present embodiment, the separator 100 is arranged in a battery (not illustrated) with the ribs 104 facing a positive electrode (not illustrated); however, this is not essential. The ribs 104 may be referred to as "positive-electrode-side ribs" when they face a positive electrode. Further, ribs extending from the other side of the microporous membrane used as the separator (such ribs are not illustrated) may be arranged along the MD or TD, facing a negative electrode (not illustrated). When such negative-electrode-side ribs are arranged along the TD, they are generally referred to as "cross ribs" and, as described below, such cross ribs are referred to as "negative-electrode-side cross ribs" or "negative cross ribs (NCRs)". The separator 100 is typically arranged in a battery and the negative-electrode-side cross ribs are positioned to face a negative electrode; however, this is not essential. As compared to the positive-electrode-side ribs, the negative-electrode-side ribs may be the same ribs, smaller ribs, longitudinal mini-ribs, cross mini-ribs, NCRs, diagonal ribs, or any combination thereof. Further, on the negative-electrode-side surface and/or the positive-electrode-side surface of the separator, ribs may be partially or entirely absent, and one or both sides of the separator may be smooth or flat.

On one or both of the positive electrode side and the negative electrode side, the ribs may be continuous, discontinuous, porous, or non-porous, and the ribs may be mini-ribs, cross mini-ribs, or the like on the negative electrode side. In a specific preferred embodiment, the ribs may be serrated (e.g., serrated positive-electrode-side ribs, serrated negative-electrode-side ribs, or both thereof). The serrated ribs may have an average MD length of about 0.05 mm to about 1 mm. The average MD length may be, for example, 0.05 mm, 0.1 mm, 0.2 mm, 0.3 mm, 0.4 mm, 0.5 mm, 0.6 mm, 0.7 mm, 0.8 mm, or not less than 0.9 mm, and/or 1.0 mm, 0.9 mm, 0.8 mm, 0.7 mm, 0.6 mm, 0.5 mm, 0.4 mm, 0.3 mm, 0.2 mm, or 0.1 mm or less. In the present embodiment, it was discovered that, as compared to the negative-electrode-side ribs, the positive-electrode-side ribs are more likely to inhibit the detachment of positive electrode active material and tend to further improve the PSoC cycle life as a result.

With regard to the ribs of the separator, a shortest distance from the base portion to the top of convex portions can be defined as a rib height R. When serrated ribs are present on the separator, the serrated ribs may have an average rib height of about 0.05 mm to about 4 mm. FIG. 6 physically illustrates a cross-section of the separator according to the present embodiment observed along the height direction. In the exemplary separator 100, a rib height 106 is defined as a height from the surface of the backweb 102, which is provided with the positive-electrode-side ribs 104 and taken as a reference point, to the top of the positive-electrode-side ribs 104. The average rib height may be, for example, about 0.05 mm, 0.1 mm, 0.2 mm, 0.3 mm, 0.4 mm (400 $\mu$m), 0.5 mm, 0.6 mm, 0.7 mm, 0.8 mm, or not less than 0.9 mm, and/or about 1.0 mm, 0.9 mm, 0.8 mm, 0.7 mm, 0.6 mm, 0.5 mm, 0.4 mm, 0.3 mm, 0.2 mm, or 0.1 mm or less. This range may be applied to a separator for industrial pull-type start-stop batteries, which can typically have an overall thickness of about 1 mm to about 4 mm, and a separator for automobile start-stop batteries, which can have a slightly smaller overall thickness (e.g., typically about 0.3 mm to about 1 mm).

The serrated ribs may have an average center-to-center pitch of about 0.1 mm to about 50 mm in the columnar portions along the machine direction. The average center-to-center pitch may be, for example, about 0.2 mm, 0.3 mm, 0.4 mm, 0.5 mm, 0.6 mm, 0.7 mm, 0.8 mm, 0.9 mm, 1.0 mm, 1.25 mm, or not less than 1.5 mm, and/or about 1.5 mm, 1.25 mm, 1.0 mm, 0.9 mm, 0.8 mm, 0.7 mm, 0.6 mm, 0.5 mm, 0.4 mm, 0.3 mm, or 0.2 mm or less. Further, the columnar portions of adjacent serrated ribs can be arranged in the same manner at the same positions or with an offset from each other in the machine direction. In an offset structure, adjacent serrated ribs are arranged at different positions along the machine direction.

As a ratio of the average rib height to the average rib base width (average rib height: average rib base width), the serrated ribs may have an average height-to-base width ratio of about 0.1:1 to about 500:1. The average height-to-base width ratio may be, for example, about 0.1 or higher :1, 25 or higher :1, 50 or higher :1, 100 or higher :1, 150 or higher :1, 200 or higher :1, 250 or higher :1, 300 or higher :1, 350 or higher :1, or 450 or higher :1, and/or about 500 or lower :1, 450 or lower :1, 400 or lower :1, 350 or lower :1, 300 or lower :1, 250 or lower :1, 200 or lower :1, 150 or lower :1, 100 or lower :1, 50 or lower :1, or 25 or lower :1.

As a ratio of the average rib base width to the average rib tip width (average rib base width:average rib tip width), the serrated ribs may have an average base width-to-tip width ratio of about 1,000: 1 to about 0.1:1. The average base width-to-tip width ratio may be, for example, about 0.1 or higher :1, 1 or higher :1, 2 or higher :1, 3 or higher :1, 4 or higher :1, 5 or higher :1, 6 or higher : 1, 7 or higher : 1, 8 or higher : 1, 9 or higher : 1, 10 or higher : 1, 15 or higher : 1, 20 or higher :1, 25 or higher :1, 50 or higher :1, 100 or higher :1, 150 or higher :1, 200 or higher :1, 250 or higher :1, 300 or higher :1, 350 or higher :1, 450 or higher :1, 500 or higher :1, 550 or higher :1, 600 or higher : 1, 650 or higher :1, 700 or higher :1, 750 or higher :1, 800 or higher :1, 850 or higher :1, 900 or higher :1, 950 or higher :1, and/or about 1,000 or lower :1, 950 or lower :1, 900 or lower :1, 850 or lower :1, 800 or lower :1, 750 or lower :1, 700 or lower :1, 650 or lower :1, 600 or lower :1, 550 or lower :1, 500 or lower :1, 450 or lower:1, 400 or lower :1, 350 or lower :1, 300 or lower :1, 250 or lower :1, 200 or lower :1, 150 or lower :1, 100 or lower :1, 50 or lower :1, 25 or lower :1, 20 or lower :1, 15 or lower :1, 10 or lower :1, 9 or lower :1, 8 or lower:1, 7 or lower :1, 6 or lower :1, 5 or lower :1, 4 or lower :1, 3 or lower :1, 2 or lower :1, or 1 or lower:1.

In one embodiment, the separator may be characterized by linear ribs, serrated ribs, dimples, or a combination thereof. For example, the separator may have a series of serrated ribs extending vertically, and a second series of serrated ribs extending horizontally. In another embodiment, the separator may have alternating series of linear ribs, serrated ribs, dimples, continuous ribs, broken ribs, broken linear ribs, or a combination thereof.

In one embodiment, the separator is a porous membrane, and may have, as projections, negative-electrode-side longitudinal or cross ribs on the opposite surface of the membrane. The negative-electrode-side (i.e., back-side) ribs may be parallel to the upper edge of the separator, or may be arranged at a specific angle with respect to the upper edge in a top view. For example, the cross ribs may be oriented at an angle of about 90°, 80°, 75°, 60°, 50°, 45°, 35°, 25°, 15°, or 5°, with respect to the upper edge. The cross ribs may also be oriented at an angle of about 90° to 60°, 60° to 30°, 60° to 45°, 45° to 30°, or 30° to 0°, with respect to the upper edge. Typically, the cross ribs exist on the membrane surface facing a negative electrode.

In one embodiment, a ribbed membrane may have a lateral cross rib height (HNCR) of at least about 0.005 mm, 0.01 mm, 0.025 mm, 0.05 mm, 0.075 mm, 0.1 mm, 0.2 mm, 0.3 mm, 0.4 mm, 0.5 mm, 0.6 mm, 0.7 mm, 0.8 mm, 0.9 mm, or 1.0 mm, or the ribbed membrane may have a HNCR of about 1.0 mm, 0.5 mm, 0.25 mm, 0.20 mm, 0.15 mm, 0.10 mm, or 0.05 mm or less.

In one embodiment, the ribbed membrane may have a lateral cross rib width of at least about 0.005 mm, 0.01 mm, 0.025 mm, 0.05 mm, 0.075 mm, 0.1 mm, 0.2 mm, 0.3 mm, 0.4 mm, 0.5 mm, 0.6 mm, 0.7 mm, 0.8 mm, 0.9 mm, or 1.0 mm. In another embodiment, the ribbed membrane may have a lateral cross rib width of about 1.0 mm, 0.5 mm, 0.25 mm, 0.20 mm, 0.15 mm, 0.10 mm, or 0.05 mm or less.

In a specific embodiment, the porous membrane used as the separator may have a lateral cross rib height of about 0.10 to 0.15 mm and a longitudinal rib height of about 0.10 to 0.15 mm. In one embodiment, the porous membrane may have a lateral cross rib height of about 0.10 to 0.125 mm and a longitudinal rib height of about 0.10 to 0.125 mm.

The above-described negative-electrode-side cross ribs may be smaller and closer to one another than the positive-electrode-side ribs. While the positive-electrode-side ribs 104 have a height of 8 $\mu$m to 1 mm and may be apart from each other by only 1 $\mu$m to 20 mm, a preferred backweb thickness (not including ribs or embossments) of a polyolefin microporous membrane used as the separator may be about 50 $\mu$m to about 500 $\mu$m (e.g., about 125 $\mu$m or less in a specific embodiment). Plural ribs may be apart from each other by 0.05 mm or more, 0.1 mm or more, 0.2 mm or more, 0.3 mm or more, 0.4 mm or more, 0.5 mm or more, 0.6 mm or more, 0.7 mm or more, 0.8 mm or more, 0.9 mm or more, 1.0 mm or more, 1.1 mm or more, 1.2 mm or more, 1.3 mm or more, 1.4 mm or more, 1.5 mm or more, 1.6 mm or more, 1.7 mm or more, 1.8 mm or more, 1.9 mm or more, 2.0 mm or more, up to 20 mm. It is noted here that a backweb thickness 107 is defined as the thickness of the backweb 102 in the exemplary separator 100 of FIG. 6.

The negative-electrode-side cross ribs may have a height of preferably about 25 $\mu$m to about 100 $\mu$m, more preferably about 50 $\mu$m to 75 $\mu$m, or the height may be less than 25 $\mu$m. In some cases, the height of the NCRs is about 25 $\mu$m to about 250 $\mu$m, and may be preferably about 50 $\mu$m to 125 $\mu$m, or about 50 $\mu$m to 75 $\mu$m.

When the area of the rib convex portions as protruding portions is defined as A and the area of the base portion is defined as B in an effective range of the separator in a plan view, from the viewpoint of obtaining an effect of inhibiting the detachment of active materials by allowing the ribs to press the nonwoven fabric against the electrodes, the value of A/(A + B) is preferably 0.01 or larger, more preferably 0.02 or larger, still more preferably 0.03 or larger, yet still more preferably 0.04 or larger, further more preferably 0.05 or larger, particularly preferably 0.06 or larger. In a portion without ribs, the nonwoven fabric is not pressed against the electrodes and a microporous structure of the nonwoven fabric is thus maintained, so that an electrolyte solution is likely to permeate thereinto. From the viewpoint of allowing an electrolyte solution to exist in abundance in the vicinity of the electrodes and thereby ensuring the capacity of the lead storage battery, the value of A/(A + B) is preferably 0.4 or smaller, more preferably 0.35 or smaller, still more preferably 0.3 or smaller, yet still more preferably 0.25 or smaller, further more preferably 0.20 or smaller, particularly preferably 0.15 or smaller.

The values relating to the rib dimensions, such as angle with respect to an edge, height, width, length, and pitch, can be determined by, for example, observing the separator under a cross-sectional/surface scanning electron microscope (SEM). The detailed conditions of the SEM observation are described below in the section of Examples.

<Separator Thickness>

In some embodiments, the separator may include a backweb having a thickness of at least about 50 $\mu$m, at least about 75 $\mu$m, at least about 100 $\mu$m, at least about 125 $\mu$m, at least about 150 $\mu$m, at least about 175 $\mu$m, at least about 200 $\mu$m, at least about 225 $\mu$m, at least about 250 $\mu$m, at least about 275 $\mu$m, at least about 300 $\mu$m, at least about 325 $\mu$m, at least about 350 $\mu$m, at least about 375 $\mu$m, at least about 400 $\mu$m, at least about 425 $\mu$m, at least about 450 $\mu$m, at least about 475 $\mu$m, or at least about 500 $\mu$m.

< <Nonwoven Fabric>>

The nonwoven fabric according to the present embodiment is a porous body arranged between the positive electrode and the separator. By using the nonwoven fabric according to the present embodiment, detachment of positive electrode active material and stratification during charging and discharging in PSoC can be inhibited. The nonwoven fabric contains fibers from the viewpoint of improving the strength by entanglement of the fibers. As the fibers, various forms of fibers such as inorganic fibers, core-sheath fibers, and organic fibers (excluding core-sheath fibers) can be used. The nonwoven fabric also contains a filler from the viewpoint that pores can be formed by using the filler in combination with the fibers, and/or from the viewpoint that controlling of the pore size of the nonwoven fabric by retaining the filler in the voids between plural fibers contributes to the inhibition of the precipitation of sulfate ions or the retention of positive electrode active material. As the filler, at least one selected from the group consisting of inorganic particles, organic particles, and organic-inorganic composite particles can be used. Thereamong, organic particles and organic-inorganic composite particles, as compared to inorganic particles, generally have a lower density and are often more easily scattered when handled as a powder. Therefore, from the viewpoint of the ease of handling, inorganic particles are preferred since they are less likely to be scattered in the space when handled as a powder. It is noted here that the nonwoven fabric according to the present invention is distinguished from the above-described separator in that the nonwoven fabric has a larger maximum pore size than the separator. The nonwoven fabric according to the present invention can be used by being pasted to the surface of an electrode during the production of the electrode, as long as the nonwoven fabric is arranged between the positive electrode and the separator during the use in the lead storage battery.

<Materials of Nonwoven Fabric>

[Fibers]

The nonwoven fabric according to the present embodiment contains fibers from the viewpoint of improving the strength of the nonwoven fabric by entanglement of the fibers, and/or from the viewpoint of reducing the pore size of the nonwoven fabric by retaining the above-described particles between plural fibers. From these viewpoints, as the fibers, both inorganic fibers and organic fibers can be used. It is noted here that, with regard to the fibers contained in the nonwoven fabric, the term "fiber diameter" used herein refers to the diameter $\Phi$ ($\mu$m) of a fiber observed by cross-sectional observation of the nonwoven fabric under a scanning electron microscope (SEM). When the fiber cross-section is not a perfect circle, the fiber diameter $\Phi$ is determined using the following equation where the diameter of an inscribed circle of the fiber cross-section is denoted as $\Phi_1$ ($\mu$m), and the diameter of a circumscribed circle of the fiber cross-section is denoted as $\Phi_2$ ($\mu$m):

$$\Phi = (\Phi_1 + \Phi_2)/2$$

Further, the term "average fiber diameter" used herein refers to a value that is determined by measuring the fiber diameter $\Phi$ by the above-described method for each of 50 fibers randomly selected from the separator in the cross-sectional observation of the nonwoven fabric, and calculating the arithmetic mean of the fiber diameter measured for the 50 fibers. For example, the average fiber diameter of inorganic fibers is a value that is determined by measuring the fiber diameter $\Phi$ by the above-described method for each of 50 inorganic fibers randomly selected in the above-described observation, and calculating the arithmetic mean of the fiber diameter measured for the 50 inorganic fibers.

[Inorganic Fibers]

As for a material of the inorganic fibers, for example, by using glass fibers or alumina fibers, the wettability of the nonwoven fabric with dilute sulfuric acid used as an electrolyte solution is improved, so that the electrolyte solution is made more likely to permeate into the nonwoven fabric. As a result, oxygen and hydrogen gas generated from the electrodes during charging of the lead storage battery can be prevented from being retained inside the nonwoven fabric, whereby an increase in the electrical resistance can be inhibited. From this viewpoint as well as the viewpoint of inhibiting stratification of the lead storage battery, the nonwoven fabric according to the present embodiment preferably contains inorganic fibers, particularly glass fibers or alumina fibers. Among glass fibers, it is preferable to use those having a composition with excellent acid resistance against dilute sulfuric acid used as an electrolyte solution of the lead storage battery (e.g., C glass composition). Further, from the viewpoint of improving the membrane strength of the nonwoven fabric by entanglement of fibers, it is preferable to use glass fibers in the form of wool.
From the viewpoint of forming fine pores inside the nonwoven fabric by network structures formed by the inorganic fibers and/or the viewpoint of inhibiting stratification in the battery case of the lead storage battery, the inorganic fibers have an average fiber diameter of preferably 500 $\mu$m or less, more preferably 100 $\mu$m or less, still more preferably 50 $\mu$m or less, yet still more preferably 30 $\mu$m or less, further more preferably 20 $\mu$m or less, particularly preferably 10 $\mu$m or less, most preferably 5 $\mu$m or less, 3 $\mu$m or less, 2 $\mu$m or less, or 1 $\mu$m or less. Further, from the viewpoint of the difficulty of the production, the average fiber diameter of the inorganic fibers is preferably 0.05 $\mu$m or larger, more preferably 0.1 $\mu$m or larger, still more preferably 0.3 $\mu$m or larger, yet still more preferably 0.5 $\mu$m or larger.

[Organic Fibers]

The nonwoven fabric according to the present embodiment preferably contains organic fibers, and examples of the organic fibers include: polyethylene terephthalate (PET) fibers, poly-1,3-trimethylene terephthalate (PTT) fibers, polybutylene terephthalate (PBT) fibers, carbon fibers, and polyolefin fibers (e.g., polyethylene fibers and polypropylene fibers), which are inexpensive and have excellent acid resistance; polyamide fibers having excellent heat resistance, such as PA9T; and cellulose fibers. It is also possible to use organic fibers other than the above-exemplified ones within a range in which the effects of the present invention are exerted.

• Core-Sheath Fibers

The nonwoven fabric according to the present embodiment preferably contains core-sheath fibers. Core-sheath fibers form three-dimensional network structures inside the nonwoven fabric, and the network structures are strongly bound with each other by a melting component of the sheath; therefore, a high heat resistance, particularly a high heat resistance in dilute sulfuric acid (weight retention and shape retention) is exerted.
In the present specification, "core-sheath fibers" are defined as fibers in which the surface of each fiber (core) is partially or entirely covered with an organic component (sheath) having a melting point of not higher than 150°C, and the melting point of the core is higher than that of the sheath. Since the wet paper drying step employed in a wet papermaking process is generally carried out at 200°C or lower, it is more preferred that the surfaces of the core-sheath fibers partially or entirely have a melting point of lower than 200°C. From the viewpoint of uniformly and strongly binding the core-sheath fibers with surrounding materials, preferably not less than 20%, more preferably not less than 50%, still more preferably not less than 70%, most preferably 100% of the surface area of the core-sheath fibers (cores) is covered with the sheath. For example, in a broad sense, fibers in which the surface of each fiber (core) is partially covered with an organic component (sheath) having a lower melting point than the core as in side-by-side fibers (fibers in which two or more kinds of fibers having different melting points are combined as the same fibers along the fiber longitudinal direction) are also included in the core-sheath fibers according to the present embodiment. Further, the sheath is not limited to a single composition, and the core may be covered with two or more kinds of sheath compositions. In such a case, a fiber having the highest melting point in each core-sheath fiber is defined as the core. In consideration of uniform binding of plural kinds of materials in the nonwoven fabric, core-sheath fibers in which the core surface is entirely covered with a single kind of sheath composition are preferred. Further, in consideration of uniform binding of plural kinds of materials in the nonwoven fabric, it is preferred that the core surface be entirely covered with an organic component (sheath). The core-sheath fibers are not required to have a circular cross-section when cut in the transverse direction perpendicular to the fiber longitudinal direction; however, from the viewpoint of uniformly binding the core-sheath fibers with other materials of the nonwoven fabric, the core-sheath fibers preferably have a circular cross-section. A shape of the core in the cross-section can be determined as desired and, considering the same viewpoint, it is preferably circular. Moreover, in a broad sense, fibers in which the surfaces of inorganic fibers (glass fibers) are covered with an organic component (sheath) having a melting point of lower than 200°C, and the melting point of the inorganic fibers is higher than that of the organic component are also included in the core-sheath fibers according to the present embodiment. It is noted here that, in the present specification, the inorganic fibers whose surfaces are covered with an organic component (sheath) having a melting point of lower than 200°C are regarded as core-sheath fibers and distinguished from the above-described inorganic fibers (fibers consisting of only an inorganic component). In consideration of the viewpoint of producing a light nonwoven fabric as well as the viewpoint that inorganic fibers are easily broken or cut by the stress applied during densification (e.g., pressing) of the nonwoven fabric, it is preferred that both the core and the sheath of the core-sheath fibers be composed of an organic component.

The term "melting component" used herein refers to the sheath of the above-described core-sheath fibers. Further, "non-melting component" of the core-sheath fibers according to the present embodiment refers to the core of the core-sheath fibers.

The term "melting point" used herein refers to a melting temperature at which a material starts to melt and deform when heated in the air from room temperature at a heating rate of 10°C/min. The term "melting" also encompasses softening accompanied by a change in shape. For example, when specific core-sheath fibers are left to stand in a state of having points of contact with other material (e.g., fibers, particles, or a resin), heated from room temperature to 200°C at a heating rate of 10°C/min, and then cooled to room temperature, if the surfaces of the core-sheath fibers are melted and deformed to form fusion points with the other material or the cross-sectional shape of the core-sheath fibers is modified, the melting component of the core-sheath fibers has a melting point of lower than 200°C.

For example, when the core-sheath fibers are heat-dried in a wet papermaking process (e.g., when dried at a temperature of equal to higher than the melting point of the sheath but lower than the melting point of the core), since the core is not melted and remains in a fibrous form, the melting component is likely to stay around the core, hardly wet-spreading to other materials (e.g., inorganic fibers or particles). Therefore, the core-sheath fibers inhibit an increase in the electrical resistance that is caused by filling of the pores of the nonwoven fabric. In addition, since the core maintains a fibrous form in the nonwoven fabric when the sheath is melted by heat-drying, strong three-dimensional network structures can be formed in the nonwoven fabric as a result of binding between the network structures of core fibers with the melting component derived from the sheath, so that the strength of the nonwoven fabric is improved. From the viewpoint of satisfying both a high membrane strength and a low electrical resistance in the nonwoven fabric, the melting component of the core-sheath fibers according to the present embodiment is preferably a polyester having a melting point of not higher than 150°C. Further, the non-melting component of the core-sheath fibers is preferably a polyester having a melting point of not lower than 200°C. In another embodiment, when the melting component has a melting point of lower than 200°C, the nonwoven fabric can be produced at a relatively low heat-drying temperature.

Advantages of core-sheath fibers containing both a melting component and a non-melting component will now be described in comparison to fibers that are entirely melted when heated to a melting point or higher (hereinafter, also referred to as "fully-melting fibers"). As compared to core-sheath fibers of the same length and diameter, fully-melting fibers have a higher ratio of a melting component with respect to the fibers and are thus more easily wet-spread to other materials (e.g., fibers and particles), as a result of which the electrical resistance of the nonwoven fabric is likely to be increased. In addition, fully-melting fibers do not contain a component that is, like the core of the core-sheath fibers, left unmelted when heated to a melting point or higher; therefore, fully-melting fibers are likely to be melted entirely and wet-spread to other materials. Consequently, regions depleted of a melting component are formed in a nonwoven fabric obtained using fully-melting fibers, and this nonwoven fabric has a lower mechanical membrane strength than a nonwoven fabric obtained using core-sheath fibers. Thus, in the nonwoven fabric according to the present embodiment, it is preferable to use core-sheath fibers.

The core-sheath fibers according to the present embodiment are not limited to a specific resin composition, and examples of the core composition of the core-sheath fibers include polyethylene terephthalate (PET), poly-1,3-trimethylene terephthalate (PTT), polybutylene terephthalate (PBT), and polyolefins (e.g., polypropylenes and polyethylenes), which are all chemically stable against dilute sulfuric acid used as an electrolyte solution of the lead storage battery. Thereamong, a PET that is low cost and has a higher specific gravity than water (i.e. unlikely to float on the slurry surface during the production of an aqueous slurry) is preferred. Alternatively, the core may be composed of an inorganic component such as glass or alumina.

The sheath composition of the core-sheath fibers is preferably an organic component from the viewpoint of melting the sheath at a low temperature, and examples thereof include polyesters, polyolefins (e.g., polyethylenes and polypropylenes), and EVOH (ethylene-vinyl copolymers), which have a melting point of lower than 200°C. Thereamong, polyesters, polyethylenes, and polypropylenes, which are chemically stable against dilute sulfuric acid used as an electrolyte solution of the lead storage battery, are preferred. The melting component is preferably a polyester that is not only hardly wet-spread to hydrophilic inorganic particles or glass fibers and fill the pores of the nonwoven fabric but also likely to inhibit an increase in the resistance and, from the viewpoint of lowering the processing temperature in the separator production, the melting component is more preferably a polyester having a melting point of lower than 200°C.

In the core-sheath fibers according to the present embodiment, either of an amorphous sheath and a crystalline sheath may be selected. An amorphous sheath is excellent in binding property attributed to the melting component of the core-sheath fibers, while a crystalline sheath is excellent in oxidation resistance, chemical resistance, and the like. Examples of the sheath include amorphous polyesters and crystalline polyesters. From the viewpoint of lowering the processing temperature, these polyesters preferably have a melting point of lower than 200°C.

Representative examples of the core-sheath fibers include: fibers in which the core is composed of a PET having a melting point of 200°C or higher and the sheath is composed of a polyester having a melting point of 150°C or lower; fibers in which the core is composed of a PET having a melting point of 200°C or higher and the sheath is composed of a polyethylene having a melting point of lower than 200°C; fibers in which the core is composed of a PET having a melting point of 200°C or higher and the sheath is composed of a polypropylene having a melting point of lower than 200°C; fibers in which the sheath is composed of a polyethylene or polypropylene having a melting point of lower than 200°C and the core is composed of a polypropylene having a higher melting point than the sheath; and fibers in which the core is composed of a PET having a melting point of 200°C or higher and the sheath is composed of an EVOH having a melting point of lower than 200°C. Thereamong, from the viewpoint of inhibiting an increase in the electrical resistance of the nonwoven fabric and improving the resistance to dilute sulfuric acid, fibers in which the core is composed of a PET having a melting point of 200°C or higher and the sheath is composed of a polyester having a melting point of lower than 200°C are preferred.

From the viewpoint of improving the heat resistance (weight retention and shape retention) of the nonwoven fabric in dilute sulfuric acid by allowing the core-sheath fibers to form three-dimensional network structures in the nonwoven fabric and thereby increasing the binding strength between the fibers of the network structures, a weight ratio of the sheath component and the core component in the core-sheath fibers [weight (g) of melting component/weight (g) of non-melting component] is preferably 0.06 or higher, more preferably 0.10 or higher, still more preferably 0.15 or higher, yet still more preferably 0.20 or higher, further more preferably 0.30 or higher, yet further more preferably 0.40 or higher, particularly preferably 0.50 or higher, most preferably 0.60 or higher. Further, (i) when the melting component is melted and the fibrous non-melting component remains in the nonwoven fabric at the time of heat-drying the nonwoven fabric, the nonwoven fabric can be provided with a strength attributed to the non-melting component, or (ii) the melting component can be prevented from filling the pores of the nonwoven fabric by reducing the ratio of the melting component in the core-sheath fibers. From the above-described viewpoint of (i) or (ii) the weight ratio [weight (g) of melting component/weight (g) of non-melting component] is preferably 50 or lower, more preferably 10 or lower, still more preferably 9.0 or lower, yet still more preferably 8.0 or lower, further more preferably 7.0 or lower, particularly preferably 6.0 or lower, most preferably 5.0 or lower, 4.0 or lower, 3.0 or lower, 2.0 or lower, or 1.6 or lower.

The heat resistance is reduced as the melting point of the sheath of the core-sheath fibers is lowered, while the heat-drying temperature required for sufficiently melting the sheath increases as the melting point is increased; therefore, the melting point of the sheath component is preferably higher than 50°C but lower than 200°C, more preferably higher than 60°C but lower than 190°C, still more preferably 65°C to 180°C, yet still more preferably 85°C to 170°C, further more preferably 90°C to 150°C, particularly preferably 100°C to 150°C. Further, as the melting point of the core of the core-sheath fibers is lowered, the melting point of the sheath is naturally lowered and the heat resistance is consequently reduced; therefore, the melting point of the core is preferably 60°C or higher, more preferably 100°C or higher, still more preferably 150°C or higher, yet still more preferably higher than 200°C, further more preferably higher than 220°C, particularly preferably 240°C or higher.

When the nonwoven fabric according to the present embodiment is produced by wet papermaking, from the viewpoint of preventing fibers from floating on the surface layer of an aqueous slurry and thereby allowing the core-sheath fibers to be uniformly dispersed, the specific gravity of the core-sheath fibers is preferably larger than the specific gravity of water. From this viewpoint, the composition of the core-sheath fibers according to the present embodiment preferably includes a polyester, and core-sheath fibers in which the core is composed of a PET and the sheath is composed of a polyester are more preferred.

The above-described organic fibers may be used in a single kind, or in combination of two or more kinds thereof. From the viewpoint of increasing the binding points between materials per fiber to improve the strength of the nonwoven fabric, particularly the membrane strength when the nonwoven fabric is in a membrane form, the above-described core-sheath fibers and the above-described organic fibers other than the core-sheath fibers have a fiber length of preferably not less than 0.5 mm, more preferably not less than 1 mm, still more preferably not less than 2 mm, yet still more preferably not less than 3 mm. Further, from the viewpoint of inhibiting entanglement of the fibers in a slurry during wet papermaking and thereby improving the dispersibility of the fibers in the slurry, the fiber length is preferably 300 mm or less, more preferably 100 mm or less, still more preferably 50 mm or less, yet still more preferably 30 mm or less, further more preferably 15 mm or less, particularly preferably 10 mm or less, most preferably 8 mm or less.

From the viewpoint of inhibiting entanglement of the fibers in a slurry during wet papermaking and thereby improving the dispersibility of the fibers in the slurry, the core-sheath fibers and the organic fibers other than the core-sheath fibers have an average fiber diameter of preferably not less than 0.1 $\mu$m, more preferably not less than 0.5 $\mu$m, still more preferably not less than 1 $\mu$m, yet still more preferably not less than 3 $\mu$m, further more preferably not less than 5 $\mu$m, particularly preferably not less than 8 $\mu$m. Further, when the nonwoven fabric is imparted with fibers of the same weight and length, a smaller diameter of the fibers leads to a greater number of the fibers, allowing the fibers to provide a denser network structures; therefore, the average fiber diameter of the core-sheath fibers and the organic fibers other than the core-sheath fibers is preferably 500 $\mu$m or less, more preferably 50 $\mu$m or less, still more preferably 30 $\mu$m or less, yet still more preferably 25 $\mu$m or less, particularly preferably 20 $\mu$m or less.

[Filler for Nonwoven Fabric]

The nonwoven fabric according to the present embodiment preferably contains a filler from the following three viewpoints.

(i) the viewpoint of forming pores by combining the filler with the nonwoven fabric according to the present embodiment;
(ii) the viewpoint of maintaining an active material to inhibit the detachment thereof during charge-discharge cycles by retaining the filler in the voids between plural fibers and thereby reducing the pore size of the nonwoven fabric; and
(iii) the viewpoint of inhibiting a dendrite short circuit, or a short circuit caused by permeation of an active material into the nonwoven fabric.

From these viewpoints (i) to (iii), as the filler for the nonwoven fabric, any of inorganic particles, organic particles, and organic-inorganic composite particles can be used. As compared to inorganic particles, organic particles and organic-inorganic composite particles generally have a lower density in many cases; therefore, it is preferable to use inorganic particles that are less likely to be scattered in the space during the handling thereof as a powder. When the filler for the nonwoven fabric is inorganic particles, this filler may be the same as the above-described filler suitable for the separator.
When organic particles or organic-inorganic composite particles are used, pores can be formed in the nonwoven fabric by, in the production (particularly the heating step) of the nonwoven fabric, incorporating the particles into the nonwoven fabric with the particles maintaining their shape. From the viewpoint of leaving the shape of the particles in the nonwoven fabric, an organic component contained in the organic particles or organic-inorganic composite particles preferably has a higher melting point than the sheath of the core-sheath fibers, and the melting point of the organic component is higher than that of the sheath of the core-sheath fibers by preferably at least 5°C, more preferably at least 10°C, still more preferably at least 20°C, yet still more preferably at least 100°C.
Examples of a material of the inorganic particles include: oxide ceramics, such as silica (e.g., precipitated silica, gelled silica, and fumed silica), alumina, sulfates (e.g., barium sulfate and calcium sulfate), titania (rutile-type and anatase-type), gibbsite, bayerite, boehmite, zirconia, magnesia, ceria, yttria, zinc oxide, and iron oxide; and nitride ceramics, such as silicon nitride, titanium nitride, and boron nitride, as well as silicon carbide, calcium carbonate, aluminum sulfate, aluminum hydroxide, magnesium hydroxide, potassium titanate, talc, synthetic kaolinite, kaolin clay, kaolins (kaolinite, dickite, and nacrite), fired kaolin, fraipontite, stevensite, dickite, nacrite, halloysite, pyrophyllite, odinite, montmorillonite, beidellite, nontronite, volkonskoite, saponite, hectorite, fluorohectorite, sauconite, swinefordite, vermiculite, fluorovermiculite, berthierine, sericite, amesite, kellyite, fraiponite, brindleyite, bentonite, zeolite, biotite, phlogopite, fluorophlogopite, annite, eastonite, tainiolite, siderophyllite, tetra-ferri-annite, lepidolite, tetrasilicic fluoromica, polylithionite, muscovite, celadonite, ferroceladonite, ferro-aluminoceladonite, aluminoceladonite, tobelite, paragonite, clintonite, kinoshitalite, bityite, anandite, margarite, clinochlore, chamosite, pennantite, nimite, baileychlore, donbassite, cookeite, sudoite, hydrotalcite, calcium silicate, magnesium silicate, aluminum silicate, diatomite, and quartz sand.
Among the above-exemplified materials, the filler used in the nonwoven fabric is preferably particles of silica, alumina, kaolin, titania, aluminum silicate, or barium sulfate that are highly hydrophilic and have excellent acid resistance and oxidation resistance. For the inhibition of stratification in the lead storage battery, it is required to maintain the sulfuric acid concentration to be spatially uniform in the electrolyte solution. In order to make the sulfuric acid concentration uniform, precipitation of sulfuric acid released from the electrode surface due to battery reaction needs to be inhibited by the nonwoven fabric. For this purpose, from the viewpoint of adsorbing and retaining sulfuric acid on the surfaces of inorganic particles, it is more preferred to use particles of alumina, silica, kaolin, or the like. Further, from the viewpoint of inhibiting the formation of low-conductivity sulfate (sulfation) or the progress thereof on the positive electrode and the negative electrode of the lead storage battery by the use of the nonwoven fabric according to the present embodiment, it is preferable to use barium sulfate as the inorganic particles.
The filler for the nonwoven fabric according to the present embodiment may be used singly, or in combination of two or more kinds thereof.
From the viewpoint of forming fine pores in the nonwoven fabric, the filler for the nonwoven fabric has a particle size of preferably smaller than 18 $\mu$m, more preferably 17 $\mu$m or smaller, still more preferably 16 $\mu$m or smaller, yet still more preferably 15 $\mu$m or smaller, further more preferably 14 $\mu$m or smaller, particularly preferably 13 $\mu$m or smaller, most preferably 12 $\mu$m or smaller. From the viewpoint of forming fine pores throughout the nonwoven fabric, this particle size is preferably an average particle size. Further, from the viewpoint of making the filler more likely to be retained in the network of the fibers constituting the nonwoven fabric and the viewpoint of forming fine pores in the nonwoven fabric by the retention of the filler, the particle size of the filler is preferably 6 $\mu$m or larger, more preferably 7 $\mu$m or larger, still more preferably 8 $\mu$m or larger, yet still more preferably 9 $\mu$m or larger, particularly preferably 10 $\mu$m or larger. From the viewpoint of forming fine pores throughout the nonwoven fabric, this particle size is preferably an average particle size.

[Resin for Nonwoven Fabric]

The nonwoven fabric according to the present embodiment preferably contains a resin as an organic component other than the organic components of the above-described fibers and particles. This resin for the nonwoven fabric can be distinguished from the above-described particles in that the resin does not have a particle shape in the nonwoven fabric. Such a resin component is melted in a series of the heat-drying step and the like in a wet papermaking process and bound with the particles or the fibers, whereby a nonwoven fabric having a fine porous structure can be produced. When the resin component is melted in a series of the heat-drying step and the like in a wet papermaking process and fills the majority of the pores of the resulting nonwoven fabric, the electrical resistance of the lead storage battery that includes the nonwoven fabric between electrodes is increased. A low electrical resistance can be maintained by reducing the fluidity under heating of the resin component and thereby allowing pores to remain in the nonwoven fabric. From the viewpoint of forming a fine porous structure in the nonwoven fabric and the viewpoint of reducing the fluidity under heating of the resin component to leave pores in the porous body and to maintain a low electrical resistance in dilute sulfuric acid when the nonwoven fabric is used between the electrodes of the lead storage battery, the resin according to the present embodiment is preferably one of the resins exemplified below.

Preferred specific examples of the resin for the nonwoven fabric according to the present embodiment include: acrylic resins; styrene resins; acrylic urethane resins; acrylic styrene resins; vinyl acetate-acrylic resins; styrene-butadiene resins; acrylonitrile-butadiene resins; natural rubber resins; polybutadiene resins (BR resins); methyl methacrylate-butadiene resins; 2-vinylpyridine-styrene-butadiene resins (VP resin); chloroprene resins; polyolefin resins, such as polyethylenes, polypropylenes, polybutenes, and copolymers thereof; modified polyolefin resins obtained by chlorination or acid modification of the above-described polyolefin resins; fluorine-containing resins, such as polyvinylidene fluorides and polytetrafluoroethylenes; fluorine-containing rubbers, such as vinylidene fluoride-hexafluoropropylene-tetrafluoroethylene copolymers and ethylene-tetrafluoroethylene copolymers; (meth)acrylic acid-styrene-butadiene copolymer resins and hydrides thereof; polyvinyl alcohol resins; and polyvinyl alcohol-polyacetate copolymer resins.

Among the above-described specific examples, an acrylic resin and/or a styrene resin is more preferred for the use in the nonwoven fabric since these resins have excellent bindability with particles or fibers as well as excellent acid resistance.

The term "acrylic resin" used herein encompasses polymers such as acrylic urethane resins, acrylic styrene resins, acrylic styrene-butadiene resins, vinyl acetate-acrylic resins, and acrylic resins.

Further, the term "styrene resin" used herein encompasses polymers such as acrylic styrene resins, styrene-butadiene resins, acrylic styrene-butadiene resins, 2-vinylpyridine-styrene-butadiene resins, and styrene resins.

These resins may also contain one or more other components in addition to the above-exemplified respective compositions. It is noted here that the resin according to the present embodiment is not limited to a single kind of resin, and a combination of plural kinds of resins may be used within a range in which the effects of the present invention can be obtained. For example, a combination of an acrylic resin and a styrene resin can be used.

It is preferred that the resin for the nonwoven fabric according to the present embodiment contain a silane compound, and it is more preferred that the acrylic resin and/or the styrene resin contain a silane compound. By incorporating a silane compound into the resin for the nonwoven fabric, the affinity between the nonwoven fabric and a dilute sulfuric acid electrolyte solution can be increased, so that the stratification-inhibiting performance can be improved. From the viewpoint of further improving the stratification-inhibiting performance, in the nonwoven fabric, the content of silicon (Si) in the silane compound is preferably more than 0 parts by weight but 6 parts by weight or less, more preferably 1 part by weight to 5 parts by weight, with respect to 100 parts by weight of the acrylic resin and/or the styrene resin.

The silane compound used in the present embodiment is not particularly limited as long as it is an alkoxysilane group-containing polymerizable monomer, and examples thereof include vinyltrimethoxysilane, vinyltriethoxysilane, vinyltris($\beta$-methoxyethoxy)silane, vinylmethyldimethoxysilane, $\gamma$-methacryloxypropyltrimethoxysilane, $\gamma$-methacryloxypropylmethyldimethoxysilane, $\gamma$-acryloxypropyltrimethoxysilane, $\gamma$-acryloxypropylmethyldimethoxysilane, $\gamma$-methacryloxypropyltriethoxysilane, and $\gamma$-methacryloxypropylmethyldiethoxysilane. These silane compounds may be used singly, or in combination of two or more thereof. Thereamong, $\gamma$-methacryloxypropyltrimethoxysilane, $\gamma$-methacryloxypropylmethyldimethoxysilane, $\gamma$-methacryloxypropyltriethoxysilane, and $\gamma$-methacryloxypropylmethyldiethoxysilane are preferred.

Among these silane compounds, *γ*-methacryloxypropyltrimethoxysilane, and *γ*-methacryloxypropyltriethoxysilane are more preferred.

In the nonwoven fabric according to the present embodiment, by using a resin that contains a silane compound, the polarity derived from Si-O bonds and the like of the silane compound allows sulfuric acid to easily permeate into the separator, as a result of which the stratification-inhibiting performance can be improved. From the viewpoint of obtaining a sufficient stratification-inhibiting effect, a weight ratio of silicon (Si) in the silane compound and the resin [Si in silane compound (g)/resin solid content (g)] is preferably higher than 0, more preferably 0.001 or higher, still more preferably 0.005 or higher, yet still more preferably 0.01 or higher, further more preferably 0.03 or higher, particularly preferably 0.05 or higher, most preferably 0.07 or higher.

The nonwoven fabric exhibits a relatively high hydrophobicity when it contains organic fibers. When the resin contains a silane compound, the hydrophilicity of the separator is increased, so that the stratification-inhibiting performance is improved. From the viewpoint of the stratification-inhibiting effect, a weight ratio of Si in the silane compound and the resin [Si in silane compound (g)/resin (g)] is preferably higher than 0, more preferably 0.001 or higher, still more preferably 0.005 or higher, yet still more preferably 0.01 or higher, further more preferably 0.03 or higher, particularly preferably 0.05 or higher, most preferably 0.07 or higher. Further, as the amount of the silane compound is increased, the thickness of the silane compound polymer covering the surfaces of the separator-constituting materials including organic fibers is increased, resulting in a reduction in the pore volume of the separator. From the viewpoint of obtaining a high stratification-inhibiting performance by securing a sufficient pore volume of the separator into which dilute sulfuric acid permeates while imparting hydrophilicity to the organic fibers, the weight ratio of Si in the silane compound and the resin [Si in silane compound (g)/resin (g)] is 6 or lower, more preferably 5.9 or lower, still more preferably 5.7 or lower, yet still more preferably 5.5 or lower, further more preferably 5 or lower, particularly preferably 4 or lower, most preferably 3 or lower, 2 or lower, 1.5 or lower, or 1.0 or lower.

The resin preferably has a calculated glass transition temperature (calculated Tg) of -50°C or higher from the viewpoint of improving the heat resistance of the resin component, and the calculated Tg is preferably 70°C or lower from the viewpoint of improving the binding strength between plural materials. For the same reasons, the calculated Tg is more preferably -30°C to 50°C, still more preferably -30°C to 30°C, particularly preferably -30°C to 10°C. In the present embodiment, the calculated Tg is determined by the below-described equation based on the glass transition temperatures and the copolymerization ratios of homopolymers of the respective monomers. It is noted here that an alkoxysilane group-containing polymerizable monomer is not included in the calculation of the calculated glass transition temperature since it is crosslinkable and used in a small amount. A reactive surfactant is also not included in the calculation of the calculated glass transition temperature.

$$1/Tg = W_1/Tg_1 + W_2/Tg_2 + \cdot \cdot \cdot$$

{ wherein,

Tg: calculated glass transition temperature (K) of copolymer composed of monomer 1, monomer 2, • • •;
$W_1$, $W_2$, • • •: mass fractions of copolymers of monomer 1, monomer 2, • • • ($W_1 + W_2 + \cdot \cdot \cdot = 1$); and
$Tg_1$, $Tg_2$, • • •: glass transition temperatures (K) of homopolymers of monomer 1, monomer 2, • • •}.

The Tg (K) values of the respective homopolymers used in the above-described equation are described in, for example, Polymer Handbook (John Wiley & Sons, Inc.). Examples of numerical values used in the present embodiment include the followings: polystyrene (373 K), polymethyl methacrylate (378 K), poly-n-butyl acrylate (228 K), poly-2-ethylhexyl acrylate (218 K), polyacrylic acid (360 K), polymethacrylic acid (417 K), polyacrylonitrile (369 K), poly-2-hydroxyethyl acrylate (258 K), and poly-2-hydroxyethyl methacrylate (328 K), wherein the values in parentheses indicate the Tg of each homopolymer. When the copolymerization ratio is unknown, the copolymerization ratio is determined by pyrolysis-GCMS or NMR before calculating the calculated glass transition temperature using the above-described equation.

As the resin for the formation of the nonwoven fabric according to the present embodiment, it is preferable to use a resin in which minute polymer particles are dispersed in a liquid dispersion medium, i.e. a latex. A latex is preferred from the viewpoint of uniformly distributing the resin component in the resulting nonwoven fabric to form strong bonds between plural materials, as well as from the viewpoint of improving the heat resistance of the nonwoven fabric in dilute sulfuric acid while inhibiting an increase in the electrical resistance by allowing fine pores to remain when the nonwoven fabric is used in the lead storage battery. Specifically, the polymer particles in the latex are uniformly distributed and bind with various constituent materials in the nonwoven fabric obtained as a final product, with pores being left in the nonwoven fabric. As a result, the heat resistance of the nonwoven fabric, for example, the heat resistance (particularly the weight retention) of the nonwoven fabric in dilute sulfuric acid can be improved.

Further, the heat resistance, particularly the heat resistance in dilute sulfuric acid can be improved by uniformly distributing various constituent materials (e.g., resin, particles, and fibers) in the nonwoven fabric and allowing these materials to strongly bind with each other; therefore, the nonwoven fabric according to the present embodiment is preferably produced by wet papermaking. In the present specification, a wet papermaking product can be obtained by, for example, passing a liquid that contains a resin, fibers, and/or particles (hereinafter, such a liquid in which solid components are dispersed is referred to as "slurry") through a mesh, and subsequently heat-drying the solid components of the slurry that are deposited on the mesh. From the viewpoint of environmental concerns, the liquid used for the slurry is preferably water or an aqueous liquid. The aqueous liquid may be, for example, a solution containing water as a main component, or a mixture of water and other liquid. Accordingly, as the resin for the formation of the nonwoven fabric according to the present embodiment, it is preferable to use a resin in which minute polymer particles are dispersed in a liquid dispersion medium such as water or an aqueous liquid, i.e. an aqueous latex. The nonwoven fabric according to the present embodiment can be produced by adding the latex to the above-described slurry, and then depositing and drying the slurry on a mesh. As another production method, the nonwoven fabric according to the present embodiment can be obtained by preparing in advance a nonwoven fabric that contains fibers as a main component (e.g., in an amount of not less than 50% by weight), immersing this nonwoven fabric in a slurry containing a resin and/or particles, or coating the surface of the nonwoven fabric with a slurry containing a resin and/or particles, and then drying the nonwoven fabric.

<Method of Producing Nonwoven Fabric>

The nonwoven fabric can be produced by any method, for example, a wet papermaking process of a slurry that contains fibers, a resin, and a filler. The slurry may also contain a coagulant and/or a dispersant, as well as other additives that are used in the papermaking. In order to improve the water dispersibility of the fibers in the slurry in the wet papermaking process, a dispersant appropriate for the various fibers used in the production of the nonwoven fabric may also be added to the slurry. The water dispersibility can also be improved by adhering a surfactant component to the surfaces of the fibers in advance. As another production method, the nonwoven fabric can also be produced by preparing in advance a porous body mainly composed of fibers, immersing this porous body in a slurry containing a resin and/or inorganic particles, and then drying the porous body. From the viewpoint of producing a nonwoven fabric having a small maximum pore size, it is preferable to improve the uniformity of the materials such as fibers and particles by thoroughly stirring them in a dispersion medium. Alternatively, the nonwoven fabric can be produced by coating the porous body with a slurry containing a resin and/or inorganic particles.

<Thickness of Nonwoven Fabric>

In the lead storage battery according to the present embodiment, in consideration of inhibiting stratification by retaining an electrolyte solution inside the pores of the nonwoven fabric, the thickness (T) of the nonwoven fabric is preferably 100 $\mu$m or larger, or larger than 100 $\mu$m, more preferably 110 $\mu$m or larger, still more preferably 120 $\mu$m or larger, yet still more preferably 130 $\mu$m or larger, further more preferably 140 $\mu$m or larger, particularly preferably 150 $\mu$m or larger, most preferably 160 $\mu$m or larger, 170 $\mu$m or larger, or 180 $\mu$m or larger. Further, in consideration of arranging the nonwoven fabric in a limited space of a battery case and ensuring ionic conductivity in battery reaction, the thickness of the nonwoven fabric is preferably 1,300 $\mu$m or less, or less than 1,300 $\mu$m, more preferably 1,200 $\mu$m or less, or less than 1,200 $\mu$m, still more preferably 1,100 $\mu$m or less, or 1,000 $\mu$m or less, yet still more preferably 900 $\mu$m or less, further more preferably 800 $\mu$m or less, particularly preferably 700 $\mu$m or less, most preferably 600 $\mu$m or less, 550 $\mu$m or less, 500 $\mu$m or less, 450 $\mu$m or less, 430 $\mu$m or less, or 410 $\mu$m or less. It is noted here that, in the present specification, the thickness is defined as a value obtained by observing the nonwoven fabric under a cross-sectional scanning electron microscope (SEM), measuring the thickness for five different regions in the observed part, and calculating an arithmetic mean of the thus measured thickness of the five regions. The detailed conditions of this SEM observation are described below in the section of Examples.

In the lead storage battery, the nonwoven fabric of the present embodiment is pressed against the positive electrode by the ribs of the adjacent separator, and thereby exerts the effects of inhibiting stratification, sulfation, and detachment of positive electrode active material. Therefore, in consideration of inhibiting the precipitation of sulfuric acid or positive electrode active material by filling the voids between the separator and the positive electrode that are generated by the ribs of the separator, it is preferred that the nonwoven fabric have a sufficient thickness with respect to the above-described height (rib height) from the base portion of the separator, which is taken as a reference point, to the top of the ribs. When the thickness of the nonwoven fabric and the rib height are denoted as T and R, respectively, the thickness of the nonwoven fabric with respect to the rib height (T/R) is preferably 0.10 or more, or 0.15 or more, more preferably 0.18 or more, still more preferably 0.20 or more, yet still more preferably 0.21 or more, further more preferably 0.22 or more, particularly preferably 0.23 or more, most preferably 0.24 or more, 0.25 or more, 0.26 or more, 0.28 or more, or 0.30 or more. Further, in consideration that the precipitation of sulfuric acid or positive electrode active material is inhibited when the nonwoven fabric is pushed by the ribs against the positive electrode and thereby locally compressed, it is preferred that the thickness of the nonwoven fabric be not excessively large with respect to the rib height. In this context, the thickness of the nonwoven fabric with respect to the rib height (T/R) is preferably 11 or less, more preferably 10.00 or less, still more preferably 8.00 or less, or 5.00 or less, or 4.00 or less, yet still more preferably 3.50 or less, further more preferably 3.00 or less, particularly preferably 2.75 or less, most preferably 2.50 or less, 2.25 or less, 2.00 or less, 1.75 or less, or 1.50 or less.

<Mean Flow Pore Size>

In consideration of the inhibition of the detachment of positive electrode active material by retaining the positive electrode active material in the pores of the nonwoven fabric as well as the inhibition of a dendrite short circuit or an electrical short circuit caused by permeation of the active material into the separator, the nonwoven fabric according to the present embodiment has a mean flow pore size of preferably 25 $\mu$m or smaller, more preferably 20 $\mu$m or smaller, still more preferably 18 $\mu$m or smaller, yet still more preferably 15 $\mu$m or smaller, further more preferably 13 $\mu$m or smaller, particularly preferably 10 $\mu$m or smaller, most preferably 8 $\mu$m or smaller, 5 $\mu$m or smaller, 4 $\mu$m or smaller, 3 $\mu$m or smaller, or 2 $\mu$m or smaller. Further, in consideration of ensuring ionic conductivity, the mean flow pore size of the nonwoven fabric is preferably 0.05 $\mu$m or larger, more preferably 0.1 $\mu$m or larger, still more preferably 0.2 $\mu$m or larger, yet still more preferably 0.3 $\mu$m or larger, further more preferably 0.4 $\mu$m or larger, particularly preferably 0.5 $\mu$m or larger, most preferably 0.6 $\mu$m or larger, 0.7 $\mu$m or larger, 0.8 $\mu$m or larger, 0.9 $\mu$m or larger, 1.0 $\mu$m or larger, 1.2 $\mu$m or larger, or 1.5 $\mu$m or larger. The mean flow pore size of the nonwoven fabric can be adjusted to be in the above-described numerical range by, for example, forming the nonwoven fabric using the above-described filler and resin.

<Maximum Pore Size>

A pore size of the nonwoven fabric according to the present embodiment is not limited. However, from the viewpoint of inhibiting the detachment of positive electrode active material by retaining the positive electrode active material in the pores of the nonwoven fabric and/or inhibiting a dendrite short circuit or an electrical short circuit caused by permeation of the active material into the separator, the nonwoven fabric has a maximum pore size of preferably 30 $\mu$m or smaller, more preferably 25 $\mu$m or smaller, still more preferably 20 $\mu$m or smaller, yet still more preferably 18 $\mu$m or smaller, further more preferably 15 $\mu$m or smaller, particularly preferably 13 $\mu$m or smaller, most preferably 10 $\mu$m or smaller, 9 $\mu$m or smaller, 8 $\mu$m or smaller, 7 $\mu$m or smaller, or 6 $\mu$m or smaller. Further, from the viewpoint of ensuring ionic conductivity, the maximum pore size of the nonwoven fabric is preferably 0.5 $\mu$m or larger, or larger than 0.5 $\mu$m, more preferably 0.8 $\mu$m or larger, still more preferably 1.0 $\mu$m or larger, yet still more preferably 1.1 $\mu$m or larger, further more preferably 1.2 $\mu$m or larger, particularly preferably 1.3 $\mu$m or larger, most preferably 1.4 $\mu$m or larger, 1.5 $\mu$m or larger, 1.6 $\mu$m or larger, 1.8 $\mu$m or larger, 1.9 $\mu$m or larger, 2.0 $\mu$m or larger, 2.2 $\mu$m or larger, 2.5 $\mu$m or larger, or 3.0 $\mu$m or larger.

EXAMPLES

The present invention will now be described in detail by way of Examples; however, the below-described Examples are merely for illustrative purposes, and the scope of the present invention is not limited thereto. Various evaluation results of the separators and the nonwoven fabrics that were obtained in Examples and Comparative Examples are shown in Table 1. Evaluation methods are described below with regard to the respective evaluation items shown in Table 1. It is noted here that various evaluations of the separators and the nonwoven fabrics are applicable, regardless of before or after the use in a lead storage battery. In the case of evaluating a separator and a nonwoven fabric after their use in a lead storage battery, various evaluations can be carried out for the separator and the nonwoven fabric that are taken out by disassembling the lead storage battery and subsequently washed with water and dried.

<Rib Height>

A separator was observed under a cross-sectional scanning electron microscope (SEM), and the height from the base portion of the separator, which was defined as a reference point, to the top of the ribs of the separator was measured at a magnification of ×200 for five different regions in a plane of the separator. Table 1 shows the arithmetic mean value of the height measured for the five regions. The unit thereof is $\mu$m.

<Thickness>

A nonwoven fabric was observed under a cross-sectional SEM, and the thickness (membrane thickness) was measured at a magnification of ×200 for five different regions in a plane of the nonwoven fabric. Table 1 shows the arithmetic mean value of the thickness measured for the five regions. The unit thereof is $\mu$m.

<Plane Observation of Separator>

A separator was observed under a surface scanning electron microscope (SEM) and, at a magnification of ×40 with an effective range of 4 mm × 3 mm, an area A of the rib convex portions and an area B of the base portions in a plan view of the separator were measured to calculate the value of A/(A + B). The term "effective range" used herein refers to a range observable under a microscope.

<Maximum Pore Size>

As a measuring device, PERM-POROMETER (model: CFP-1500AL) manufactured by Porous Materials Inc. was employed. In this device, a nonwoven fabric is used as a measurement sample, and the pore size of the nonwoven fabric is measured by applying a flow of compressed air in a state where all of the pores of the nonwoven fabric are filled with a test liquid having a known surface tension. As the test liquid, Galwick solution manufactured by Porous Materials Inc. was used for a measurement sample having a maximum pore size of smaller than 100 $\mu$m, or pure water was used for a measurement sample having a maximum pore size of 100 $\mu$m or larger. First, the nonwoven fabric cut out into a size of 25 mmΦ was immersed in the test liquid, and the measurement was carried out after removing excess test liquid. The size of the pores can be calculated from the pressure at which the air passes through the pores filled with the test liquid and the surface tension of the test liquid, and the following equation is used for the calculation:

$$d_{pore} = C \cdot \gamma / P$$

(wherein, $d_{pore}$ represents the pore size of the nonwoven fabric; $\gamma$ represents the surface tension of the test liquid; P represents the minimum air pressure at which the air passes through the pore size; and C represents a constant).

First, the air flow rate (wet flow rate) is measured when the pressure P applied to the nonwoven fabric immersed in the test liquid is continuously increased. At the beginning of the measurement, the air flow rate is 0 since all of the pores of the nonwoven fabric are in a state of being filled with the test liquid; however, as the pressure is increased, the air eventually passes through a pore having a maximum pore size, and a positive air flow rate is observed for the first time (this point is referred to as "bubble point"). In the present invention, the maximum pore size $d_{max}$ refers to a pore size of the nonwoven fabric that is determined at the bubble point. The measurement results of $d_{max}$ are shown in Table 1. The unit thereof is $\mu$m.

<Mean Flow Pore Size>

In the above-described measurement of <Maximum Pore Size>, as the pressure is further increased after the bubble point, the air flow rate increases, approaching an air flow rate of the nonwoven fabric in a dry state (dry flow rate). Once the smallest pore is opened, the air flow rate thereafter is completely consistent with the dry flow rate. In this measurement method, a value obtained by dividing the wet flow rate at a certain air pressure by the dry flow rate at the same pressure is defined as a cumulative filter flow rate (unit: %). The size of a pore opened at an air pressure giving a cumulative filter flow rate of 50% is defined as a mean flow pore size $d_{mean}$ in the present invention. The measurement results of $d_{mean}$ are shown in Table 1. The unit thereof is $\mu$m.

<Degree of Progression of Stratification>

A lead storage battery (rated capacity: 6 Ah, 2-V single cell) was assembled using a polycarbonate battery case, a single lead oxide positive electrode, a single lead negative electrode and, as required, the below-described separator and/or nonwoven fabric, and dilute sulfuric acid having a specific gravity of 1.28 was injected thereto as an electrolyte solution. Using this lead storage battery, a charge-discharge cycle test was conducted in PSoC in accordance with the 75073: 2012-07 standard to evaluate the degree of progression of stratification. As for the specific conditions of the charge-discharge cycle test, at 25°C, the initial discharging described in below (1) was carried out and subsequently, a cycle consisting of (2) and (3) was repeated.

(1) Initial discharging: at a current value of 1.2 A (0.2 C), 150-minute constant-current discharging
(2) Charging: at a current value of 2.1 A (0.35 C) and a voltage value of 2.4 V, 40-minute constant current-constant voltage charging

(3) Discharging: at a current value of 2.1 A (0.35 C) and a voltage value of 1.75 V, 30-minute constant current-constant voltage discharging

At 20 minutes after the start of the discharging of the 40th cycle, the electrolyte solution was collected from the lead storage battery at two spots in an amount of 0.5 mL each. A first spot was 3 mm below the surface of the electrolyte solution and the second spot was 3 mm above the bottom of the battery case. The tip of an acid-resistant syringe tube was positioned at each spot, and the electrolyte solution was gently collected using the acid-resistant syringe. The specific gravity of the thus collected dilute sulfuric acid as the electrolyte solution was measured using a hydrometer (model: DMA35) manufactured by Anton Parr GmbH. The difference in the thus measured specific gravity of the electrolyte solution between the two spots was calculated and shown as "Degree of progression of stratification" in Table 1.

<PSoC Cycle Life>

A lead storage battery (rated capacity: 6 Ah, 2-V single cell) was assembled using a polycarbonate battery case, a single lead oxide positive electrode, a single lead negative electrode and, as required, the below-described separator and/or nonwoven fabric, and dilute sulfuric acid having a specific gravity of 1.28 was injected thereto as an electrolyte solution. Using this lead storage battery, a charge-discharge cycle test was conducted in PSoC in accordance with the 75073: 2012-07 standard. As for the specific conditions of the charge-discharge cycle test, at 25°C, the initial discharging described in below (1) was carried out and subsequently, a cycle consisting of (2) and (3) was repeated until the discharge termination voltage was reduced to below 1.75 V. The number of cycles at this point was determined as the PSoC cycle life.

(1) Initial discharging: at a current value of 1.2 A (0.2 C), 150-minute constant-current discharging
(2) Charging: at a current value of 2.1 A (0.35 C) and a voltage value of 2.4 V, 40-minute constant current-constant voltage charging
(3) Discharging: at a current value of 2.1 A (0.35 C) and a voltage value of 1.75 V, 30-minute constant current-constant voltage discharging

It is noted here that, in the charge-discharge cycle test, the following charging and discharging of (4) to (6) were carried out at 85-cycle intervals, and the cycle was repeated again starting from the above-described initial discharging of (1).

(4) Charging: at a current value of 0.6 A (0.1 C) and a voltage value of 2.67 V, 18-hour constant current-constant voltage charging (cut-off current value: 0.1 A)
(5) Discharging: at a current value of 0.3 A (0.05 C), 150-minute constant current discharging (cut-off voltage value: 1.75 V)
(6) Charging: at a current value of 0.6 A (0.1 C) and a voltage value of 2.67 V, 23-hour constant current-constant voltage charging (cut-off current value: 0.1 A)

Table 1 shows the results, taking the PSoC cycle life in the below-described Example 1 as 100.

<Active Material Retention>

After the above-described evaluation of the PSoC cycle life, the battery that reached its life with the discharge termination voltage being reduced to below 1.75 V was disassembled. The positive electrode taken out of the battery was visually observed to evaluate the retention of the positive electrode active material in the PSoC cycles. Between before and after the evaluation of the PSoC cycle life, a positive electrode weight retention rate of 85% or higher was evaluated as A, a positive electrode weight retention rate of 70% or higher but lower than 85% was evaluated as B, and a positive electrode weight retention rate of lower than 70% was evaluated C, and the evaluation results of the active material retention are shown in Table 1.
Samples used in Examples and Comparative Examples will now be described in detail.

(Example 1)

As a separator, a polyethylene separator (backweb thickness: 300 $\mu$m, serrated ribs, rib height: 400 $\mu$m, maximum pore size: 120 nm, A/(A + B) = 0.08) was used. A piece of the separator cut into a rectangular shape was folded in half in the lengthwise direction, and both ends of the separator along the direction perpendicular to the folded side were sealed to produce a separator in the form of an envelope. In this process, the separator was folded such that the ribs were on the inside of the envelope.

For the production of a nonwoven fabric, first, 29.4% by weight of silica particles having an average particle size of 13 $\mu$m as inorganic particles, 19.6% by weight of glass fibers (made of C glass) as inorganic fibers, 39.2% by weight of core-sheath fibers (average fineness: 2.2 dtex, average fiber length: 5 mm, core-to-sheath weight ratio = 1:1) having a core portion made of PET (melting point: 255°C) and a sheath portion made of copolymerized polyester (melting point: 130°C) as organic fibers, and 11.8% (solid content) of an acrylic resin (solid concentration: 50% by weight, calculated Tg: -2°C, $\gamma$-methacryloxypropyltrimethoxysilane concentration: 0.5%, dispersion medium: water; a polymer latex) were dispersed and mixed in water to prepare a slurry. In this process, a dispersant was added to the slurry in an amount of 2 parts by weight with respect to 100 parts by weight of the solids contained in the slurry, followed by stirring. Subsequently, a coagulant was added to this slurry in an amount of 7 parts by weight with respect to 100 parts by weight of the solids contained in the slurry, and the resultant was stirred to obtain a product slurry. A sheet was formed from the thus obtained product slurry using a paper machine and subsequently dehydrated and pressed in a wet paper state, after which the sheet was heat-dried at 180°C for 3 minutes in a rotary dryer to obtain a nonwoven fabric.

A piece of the thus obtained nonwoven fabric cut into a rectangular shape was folded in half in the lengthwise direction, and inserted from the folded side into the above-obtained envelope-form separator. In this process, it was designed such that the entire interior surface of the envelope-form separator was covered with the nonwoven fabric piece. A positive electrode was inserted such that it was sandwiched between the folded nonwoven fabric piece.

The thus obtained separator, nonwoven fabric, and lead storage battery were evaluated in accordance with the above-described evaluation methods, and the results thereof are shown in Table 1.

(Comparative Example 1)

Comparative Example 1 is the same as Example 1 in terms of the materials, production methods, and evaluation methods that were used, except that the evaluations were carried out using only the separator without the nonwoven fabric.

(Examples 2 to 11)

Examples 2 to 11 are the same as Example 1 in terms of the materials, production methods, and evaluation methods that were used, except that, with regard to the nonwoven fabric, a product slurry was produced at the same mixing ratio as in Example 1 but the amount of the slurry transcribed to a sheet formed by the paper machine was increased to increase the thickness.

(Comparative Example 2)

Comparative Example 2 is the same as Example 5 in terms of the materials, production methods, and evaluation methods that were used, except that the separator was folded such that its ribs were on the outside of the resulting envelope, and that the electrode inserted into the envelope-form separator into which the folded nonwoven fabric piece had been inserted was changed to a negative electrode.

(Comparative Example 3)

Comparative Example 3 is the same as Example 5 in terms of the materials, production methods, and evaluation methods that were used, except that the separator was folded such that its ribs were on the outside of the resulting envelope.

(Comparative Example 4)

Comparative Example 4 is the same as Example 1 in terms of the materials, production methods, and evaluation methods that were used, except that the nonwoven fabric was changed to a glass mat.

(Example 12)

Example 12 is the same as Example 1 in terms of the materials, production methods, and evaluation methods that were used, except that the separator was changed to a polyethylene separator (rib height: 120 $\mu$m, A/(A + B) = 0.24).

(Examples 13 to 20 and Comparative Example 5)

Examples 13 to 20 and Comparative Example 5 are the same as Example 12 in terms of the materials, production methods, and evaluation methods that were used, except that, with regard to the nonwoven fabric, a product slurry was produced at the same mixing ratio as in Example 12 but the amount of the slurry transcribed to a sheet formed by the paper machine was increased to increase the thickness.

(Comparative Example 6)

Comparative Example 6 is the same as Example 15 in terms of the materials, production methods, and evaluation methods that were used, except that the separator was folded such that its ribs were on the outside of the resulting envelope, and that the electrode inserted into the envelope-form separator into which the folded nonwoven fabric piece had been inserted was changed to a negative electrode.

(Comparative Example 7)

Comparative Example 7 is the same as Example 15 in terms of the materials, production methods, and evaluation methods that were used, except that the separator was folded such that its ribs were on the outside of the resulting envelope.

(Example 21)

Example 21 is the same as Example 1 in terms of the materials, production methods, and evaluation methods that were used, except that the separator was changed to a polyethylene separator (rib height: 650 $\mu$m, A/(A + B) = 0.04).

(Examples 22 to 26 and Comparative Example 8)

Examples 22 to 26 and Comparative Example 8 are the same as Example 21 in terms of the materials, production methods, and evaluation methods that were used, except that, with regard to the nonwoven fabric, a product slurry was produced at the same mixing ratio as in Example 21 but the amount of the slurry transcribed to a sheet formed by the paper machine was increased or decreased to increase or decrease the thickness.

(Comparative Example 9)

Comparative Example 9 is the same as Example 24 in terms of the materials, production methods, and evaluation methods that were used, except that the separator was folded such that its ribs were on the outside of the resulting envelope, and that the electrode inserted into the envelope-form separator into which the folded nonwoven fabric piece had been inserted was changed to a negative electrode.

(Comparative Example 10)

Comparative Example 10 is the same as Example 24 in terms of the materials, production methods, and evaluation methods that were used, except that the separator was folded such that its ribs were on the outside of the resulting envelope.
The results of Examples and Comparative Examples shown in Table 1 below will now be described.

[Table 1]

| Item | Form of separator | | | Properties of nonwoven fabric | | | | | Thickness $T$/ Rib height $R$ | Evaluation | | |
|---|---|---|---|---|---|---|---|---|---|---|---|---|
| | Rib counter electrode | Rib height $R$ | A/(A + B) A: area of rib convex portions B: area of base portions Observed in plan view | Material | Nonwoven fabric counter electrode | Thickness $T$ | Maximum pore size $d_{max}$ | Mean flow pore size $d_{mean}$ | | Degree of progression of stratification | Active material retention | PSoC cycle life |
| Unit | - | μm | - | - | - | μm | μm | μm | - | - | - | - |
| Comparative Example 1 | positive electrode | 400 | 0.08 | (none) | - | 0 | - | - | 0 | 0.121 | C | 50 |

EP 4 131 625 A1

(continued)

| Item | Form of separator | | | Properties of nonwoven fabric | | | | | Thickness $T$/ Rib height $R$ | Evaluation | | |
|---|---|---|---|---|---|---|---|---|---|---|---|---|
| | Rib counter electrode | Rib height $R$ | A/(A + B) A: area of rib convex portions B: area of base portions Observed in plan view | Material | Nonwoven fabric counter electrode | Thickness $T$ | Maximum pore size $d_{max}$ | Mean flow pore size $d_{mean}$ | | Degree of progression of stratification | Active material retention | PSoC cycle life |
| Example 1 | positive electrode | 400 | 0.08 | organic fibers, glass fibers, silica particles, resin binder | positive electrode | 100 | 29.8 | 24.7 | 0.25 | 0.064 | B | 100 |
| Example 2 | positive electrode | 400 | 0.08 | | positive electrode | 120 | 24.4 | 19.5 | 0.30 | 0.052 | A | 141 |
| Example 3 | positive electrode | 400 | 0.08 | | positive electrode | 140 | 16.3 | 11.2 | 0.35 | 0.048 | A | 160 |
| Example 4 | positive electrode | 400 | 0.08 | | positive electrode | 160 | 11.8 | 5.53 | 0.40 | 0.047 | A | 167 |
| Example 5 | positive electrode | 400 | 0.08 | | positive electrode | 180 | 5.74 | 1.91 | 0.45 | 0.034 | A | 180 |
| Example 6 | positive electrode | 400 | 0.08 | | positive electrode | 410 | 3.87 | 0.78 | 1.03 | 0.030 | A | 176 |
| Example 7 | positive electrode | 400 | 0.08 | | positive electrode | 600 | 2.56 | 0.47 | 1.50 | 0.033 | A | 165 |
| Example 8 | positive electrode | 400 | 0.08 | | positive electrode | 900 | 1.92 | 0.36 | 2.25 | 0.034 | A | 149 |
| Example 9 | positive electrode | 400 | 0.08 | | positive electrode | 1,000 | 1.60 | 0.25 | 2.50 | 0.031 | A | 141 |
| Example 10 | positive electrode | 400 | 0.08 | | positive electrode | 1,200 | 0.81 | 0.09 | 3.00 | 0.030 | A | 129 |
| Example 11 | positive electrode | 400 | 0.08 | | positive electrode | 1,300 | 0.50 | 0.05 | 3.25 | 0.030 | A | 105 |
| Comparative Example 2 | positive electrode | 400 | 0.08 | | negative electrode | 180 | 5.65 | 1.92 | 0.45 | 0.036 | C | 67 |
| Comparative Example 3 | negative electrode | 400 | 0.08 | | positive electrode | 180 | 5.88 | 2.05 | 0.45 | 0.042 | C | 77 |

(continued)

| Item | Form of separator | | | Properties of nonwoven fabric | | | | | Thickness $T$/ Rib height $R$ | Evaluation | | |
|---|---|---|---|---|---|---|---|---|---|---|---|---|
| | Rib counter electrode | Rib height $R$ | A/(A + B) A: area of rib convex portions B: area of base portions Observed in plan view | Material | Nonwoven fabric counter electrode | Thickness $T$ | Maximum pore size $d_{max}$ | Mean flow pore size $d_{mean}$ | | Degree of progression of stratification | Active material retention | PSoC cycle life |
| Comparative Example 4 | positive electrode | 400 | 0.08 | glass fibers | positive electrode | 600 | 170 | 150 | 1.50 | 0.085 | B | 86 |
| Example 12 | positive electrode | 120 | 0.24 | organic fibers, glass fibers, silica particles, resin binder | positive electrode | 100 | 29.7 | 24.4 | 0.83 | 0.072 | B | 102 |
| Example 13 | positive electrode | 120 | 0.24 | | positive electrode | 120 | 29.8 | 19.9 | 1.00 | 0.063 | B | 127 |
| Example 14 | positive electrode | 120 | 0.24 | | positive electrode | 140 | 17.4 | 12.1 | 1.17 | 0.055 | A | 134 |
| Example 15 | positive electrode | 120 | 0.24 | | positive electrode | 180 | 5.74 | 1.91 | 1.50 | 0.043 | A | 140 |
| Example 16 | positive electrode | 120 | 0.24 | | positive electrode | 410 | 3.77 | 0.74 | 3.42 | 0.040 | A | 134 |
| Example 17 | positive electrode | 120 | 0.24 | | positive electrode | 600 | 2.42 | 0.45 | 5.00 | 0.034 | B | 130 |
| Example 18 | positive electrode | 120 | 0.24 | | positive electrode | 950 | 1.82 | 0.31 | 7.92 | 0.033 | B | 126 |
| Example 19 | positive electrode | 120 | 0.24 | | positive electrode | 1,000 | 1.61 | 0.25 | 8.33 | 0.035 | B | 124 |
| Example 20 | positive electrode | 120 | 0.24 | | positive electrode | 1,300 | 1.61 | 0.05 | 10.83 | 0.035 | B | 120 |

| Item | Form of separator | | | Material | Properties of nonwoven fabric | | | | Thickness $T$/ Rib height $R$ | Evaluation | | |
|---|---|---|---|---|---|---|---|---|---|---|---|---|
| | Rib counter electrode | Rib height $R$ | A/(A + B) A: area of rib convex portions B: area of base portions Observed in plan view | | Nonwoven fabric counter electrode | Thickness $T$ | Maximum pore size $d_{max}$ | Mean flow pore size $d_{mean}$ | | Degree of progression of stratification | Active material retention | PSoC cycle life |
| Comparative Example 5 | positive electrode | 120 | 0.24 | | positive electrode | 1,400 | 0.46 | 0.02 | 11.67 | 0.034 | C | 77 |
| Comparative Example 6 | positive electrode | 120 | 0.24 | | negative electrode | 180 | 5.84 | 2.01 | 1.50 | 0.045 | C | 55 |
| Comparative Example 7 | negative electrode | 120 | 0.24 | | positive electrode | 180 | 5.69 | 1.93 | 1.50 | 0.048 | C | 60 |
| Comparative Example 8 | positive electrode | 650 | 0.04 | | positive electrode | 60 | 39.4 | 30.7 | 0.09 | 0.135 | C | 70 |
| Example 21 | positive electrode | 650 | 0.04 | | positive electrode | 100 | 28.6 | 22.7 | 0.15 | 0.079 | B | 108 |
| Example 22 | positive electrode | 650 | 0.04 | | positive electrode | 140 | 14.8 | 6.9 | 0.22 | 0.075 | B | 132 |
| Example 23 | positive electrode | 650 | 0.04 | | positive electrode | 180 | 6.03 | 1.97 | 0.28 | 0.071 | B | 134 |
| Example 24 | positive electrode | 650 | 0.04 | | positive electrode | 410 | 3.71 | 0.75 | 0.63 | 0.064 | A | 144 |
| Example 25 | positive electrode | 650 | 0.04 | | positive electrode | 1,200 | 0.95 | 0.09 | 1.85 | 0.064 | A | 128 |
| Example 26 | positive electrode | 650 | 0.04 | | positive electrode | 1,300 | 0.62 | 0.05 | 2.00 | 0.058 | A | 118 |
| Comparative Example 9 | positive electrode | 650 | 0.04 | | negative electrode | 410 | 3.65 | 0.69 | 0.63 | 0.062 | C | 53 |
| Comparative Example 10 | negative electrode | 650 | 0.04 | | positive electrode | 410 | 3.58 | 0.66 | 0.63 | 0.058 | C | 54 |

EP 4 131 625 A1

In Examples 1 to 11, it can be thought that satisfaction of a T/R value of not less than 0.10 allowed the nonwoven fabric to fill the voids between the positive electrode and the separator and to retain the electrolyte solution and, therefore, contributed to a reduction in the precipitation of sulfuric acid generated from the positive electrode during charging, whereby stratification was inhibited. When stratification is inhibited, a region having a high concentration of dilute sulfuric acid is hardly generated, and degradation caused by sulfation is thus inhibited, which contributes to an improvement in the PSoC cycle life. In addition, by satisfying a T/R value of 11 or less, the nonwoven fabric having a microporous structure is allowed to exist being pressed and facing against the positive electrode by the ribs of the separator, whereby detachment of the positive electrode active material is inhibited. As a result of the inhibition of detachment of the active material and stratification, the PSoC cycle life is improved. Particularly, it is observed that the PSoC cycle life tends to be excellent when the thickness T of the nonwoven fabric is in a range of about 120 to 1,200 $\mu$m. From this, it is believed that there is a thickness range in which the nonwoven fabric not only has a sufficient micropore volume for retaining the electrolyte solution, but also does not hinder the ionic conduction in battery reaction and thus does not impair the charging efficiency. In Example 11, detachment of the positive electrode active material and stratification were inhibited by the presence of the nonwoven fabric; however, it can be thought that, since a T value of less than 1,200 $\mu$m was not satisfied, the ionic conductivity in battery reaction, consequently the charging efficiency was reduced, resulting in a relatively early reduction in the voltage. Meanwhile, in Comparative Example 1 where a T/R value of not less than 0.10 was not satisfied, there was no micropore of a nonwoven fabric for retaining sulfuric acid generated from the positive electrode during charging or the active material detached from the positive electrode. This is believed to be the reason why the degree of progression of stratification was increased, and the active material retention and the PSoC cycle life were reduced in Comparative Example 1.

Comparative Example 2 is equivalent to Example 5 in that the progress of stratification is limited since precipitation of high-concentration sulfuric acid generated from the negative electrode surface during charging can be inhibited by the presence of the nonwoven fabric facing the negative electrode. On the other hand, in Comparative Example 2, since the positive electrode was not arranged facing the nonwoven fabric and did not satisfy a condition of being housed in the envelope-form separator and the nonwoven fabric, detachment of the positive electrode active material progressed. Therefore, the PSoC cycle life of Comparative Example 2 was not only reduced to less than half of that of Example 5 where the properties of the separator and the nonwoven fabric were the same, but also inferior as compared to all of Examples 1 to 11.

Comparative Example 3 is equivalent to Example 5 in that the progress of stratification is limited since precipitation of high-concentration sulfuric acid generated from the positive electrode surface during charging can be inhibited by the presence of the nonwoven fabric facing the positive electrode. On the other hand, in Comparative Example 3, detachment of the positive electrode active material progressed since the ribs of the separator did not satisfy a condition of facing the positive electrode, and thus could not press the nonwoven fabric against the positive electrode to inhibit the detachment of the positive electrode active material. Therefore, the PSoC cycle life of Comparative Example 3 was not only reduced to less than half of that of Example 5 where the properties of the separator and the nonwoven fabric were the same, but also inferior as compared to all of Examples 1 to 11.

In Comparative Example 4 where a filler was not incorporated and neither a maximum pore size $d_{max}$ of 30 $\mu$m or smaller nor a mean flow pore size $d_{mean}$ of 25 $\mu$m or smaller was satisfied, the results were inferior to those of Examples 1 to 11 in that the degree of progression of stratification was 0.085, the active material retention was B, and the PSoC cycle life was 86. With regard to Examples 1 to 11, since the nonwoven fabric contained a filler and a resin, complex curved paths were formed inside the pores, so that the maximum pore size and the mean flow pore size were reduced. Therefore, the nonwoven fabric existing between the positive electrode and the separator contributed to the inhibition of precipitation of sulfuric acid generated from the positive electrode during charging or the active material detached from the positive electrode. On the other hand, in Comparative Example 4, since the nonwoven fabric did not contain any filler and complex curved paths were thus hardly formed inside the pores, the $d_{max}$ was 170 $\mu$m and the $d_{mean}$ was 150 $\mu$m, which were relatively larger as compared to those of Examples 1 to 11. Therefore, it can be thought that precipitation of sulfuric acid and positive electrode active material during the charge-discharge cycles was hardly inhibited, resulting a reduction in the PSoC cycle life.

In Examples 12 to 20 and Comparative Example 5, the separator and the nonwoven fabric existed between the positive electrode and the negative electrode, and the nonwoven fabric existed between the positive electrode and the separator. The rib height R of the separator was common at 120 $\mu$m, while the thickness T of the nonwoven fabric varied in a range of 100 to 1,400 $\mu$m. In Examples 12 to 20, by satisfying a T/R value of 0.10 to 11, the degree of progression of stratification was 0.033 to 0.072, the active material retention was A or B, and the PSoC cycle life was 102 to 140. On the other hand, in Comparative Example 5 where a T/R value of 11 or less was not satisfied, although the degree of progression of stratification was excellent at 0.034, other results were inferior to those of Examples 12 to 20 in that the active material retention was C and the PSoC cycle life was 77. The cause of these results is believed to be, for example, that the detachment of the positive electrode active material was no longer inhibited since the pressing of the nonwoven fabric against the positive electrode by the ribs was weak due to the excessively large thickness T of the nonwoven fabric with respect to the rib height R, and that, since the ionic conductivity was reduced due to the small mean flow pore size of the nonwoven fabric, the battery reaction efficiency was deteriorated and the charging efficiency was thus reduced. Further, in Comparative Example 6, the properties of the separator and the nonwoven fabric were the same as in Example 15 where an excellent PSoC cycle life was obtained, and Comparative Example 6 is different from Example 15 only in that the nonwoven fabric was arranged between the negative electrode and the separator, and the separator was folded such that the ribs were arranged on the outside. In Comparative Example 6, the degree of progression of stratification was 0.045, the active material retention was C, and the PSoC cycle life was 55. Comparative Example 6 is equivalent to Example 15 in that the progress of stratification is limited since precipitation of high-concentration sulfuric acid generated from the negative electrode surface during charging can be inhibited by the presence of the nonwoven fabric facing the negative electrode. On the other hand, in Comparative Example 6, since the positive electrode was not arranged facing the nonwoven fabric and did not satisfy a condition of being housed in the envelope-form separator and the nonwoven fabric, detachment of the positive electrode active material progressed. Therefore, the PSoC cycle life of Comparative Example 6 was not only reduced to less than half of that of Example 15 where the properties of the separator and the nonwoven fabric were the same, but also inferior as compared to all of Examples 12 to 20.

Comparative Example 7 is equivalent to Example 15 in that the progress of stratification is limited since precipitation of high-concentration sulfuric acid generated from the positive electrode surface during charging can be inhibited by the presence of the nonwoven fabric facing the positive electrode. On the other hand, in Comparative Example 7, detachment of the positive electrode active material progressed since the ribs of the separator did not satisfy a condition of facing the positive electrode, and thus could not press the nonwoven fabric against the positive electrode to inhibit the detachment of the positive electrode active material. Therefore, the PSoC cycle life of Comparative Example 7 was not only reduced to less than half of that of Example 15 where the properties of the separator and the nonwoven fabric were the same, but also inferior as compared to all of Examples 12 to 20.

In Examples 21 to 26 and Comparative Example 8, the separator and the nonwoven fabric existed between the positive electrode and the negative electrode, and the nonwoven fabric existed between the positive electrode and the separator. The rib height R of the separator was common at 650 $\mu$m, while the thickness T of the nonwoven fabric varied in a range of 60 to 1,300 $\mu$m. In Examples 21 to 26, by satisfying a T/R value of 0.10 to 11, the degree of progression of stratification was 0.058 to 0.079, the active material retention was A or B, and the PSoC cycle life was 108 to 144. Meanwhile, in Comparative Example 8 where the T/R value was 0.09, the degree of progression of stratification was 0.135, the active material retention was C, and the PSoC cycle life was 70. When a T/R value of not less than 0.10 is not satisfied, since the thickness of the nonwoven fabric with respect to the rib height is insufficient, the voids between the curved surface of the separator that is formed by the ribs and the surface of the positive electrode cannot be filled with the nonwoven fabric. Therefore, in Comparative Example 8, it can be thought that, since there were voids not filled with the nonwoven fabric on the surface of the positive electrode surface, and precipitation of sulfuric acid and/or the positive electrode active material occurred preferentially, the degree of progression of stratification was increased, as a result of which the active material retention, consequently the PSoC cycle life was reduced. Further, in Comparative Example 9, the properties of the separator and the nonwoven fabric were the same as in Example 24 where an excellent PSoC cycle life was obtained, and Comparative Example 9 is different from Example 24 only in that the nonwoven fabric was arranged between the negative electrode and the separator, and the separator was folded such that the ribs were arranged on the outside. In Comparative Example 9, the degree of progression of stratification was 0.062, the active material retention was C, and the PSoC cycle life was 53. Comparative Example 9 is equivalent to Example 24 in that the progress of stratification is limited since precipitation of high-concentration sulfuric acid generated from the negative electrode surface during charging can be inhibited by the presence of the nonwoven fabric facing the negative electrode. On the other hand, in Comparative Example 9, since the positive electrode was not arranged facing the nonwoven fabric and did not satisfy a condition of being housed in the envelope-form separator and the nonwoven fabric, detachment of the positive electrode active material progressed. Therefore, the PSoC cycle life of Comparative Example 9 was not only reduced to less than half of that of Example 24 where the properties of the separator and the nonwoven fabric were the same, but also inferior as compared to all of Examples 21 to 26.

In Comparative Example 10, the degree of progression of stratification was 0.058, the active material retention was C, and the PSoC cycle life was 54. Comparative Example 10 is equivalent to Example 24 in that the progress of stratification is limited since precipitation of high-concentration sulfuric acid generated from the positive electrode surface during charging can be inhibited by the presence of the nonwoven fabric facing the positive electrode. On the other hand, in Comparative Example 10, detachment of the positive electrode active material progressed since the ribs of the separator did not satisfy a condition of facing the positive electrode, and thus could not press the nonwoven fabric against the positive electrode to inhibit the detachment of the positive electrode active material. Therefore, the PSoC cycle life of Comparative Example 10 was not only reduced to less than half of that of Example 24 where the properties of the separator and the nonwoven fabric were the same, but also inferior as compared to all of Examples 21 to 26.

INDUSTRIAL APPLICABILITY

The arrangement of a separator, a nonwoven fabric, a positive electrode, a negative electrode, and an electrolyte solution according to the present invention can be utilized in lead storage batteries that are required to have excellent PSoC cycle life performance.

REFERENCE SIGNS LIST

1 Battery case
2 Terminal
3 Electrode pillar
4 Electrode group (electrode plate group)
5 Positive electrode
6 Negative electrode
7 Separator
8 Nonwoven fabric
100 Separator
101 Upper edge
102 Backweb
103 Lower edge
104 Positive-electrode-side rib
105a, 105b Side edge
106 Rib height
107 Backweb thickness

**Claims**

1. A lead storage battery, comprising:

   a positive electrode;
   a negative electrode;
   a separator interposed between the positive electrode and the negative electrode; and
   a nonwoven fabric that is arranged between the positive electrode and the separator, and comprises fibers and a filler,
   wherein
   the separator comprises ribs each formed in a convex shape from a base portion on the side of the positive electrode, and
   a thickness T of the nonwoven fabric and a height R from the base portion taken as a reference point to a top of the ribs have a relationship T/R of 0.10 to 11.

2. The lead storage battery according to claim 1, wherein the nonwoven fabric has a mean flow pore size of 25 $\mu$m or smaller.

3. The lead storage battery according to claim 1 or 2, wherein the nonwoven fabric has a mean flow pore size of 0.05 $\mu$m or larger.

4. The lead storage battery according to any one of claims 1 to 3, wherein, when the area of convex portions is defined as A and the area of the base portion is defined as B in an effective range of the separator in a plan view, A/(A + B) is 0.01 to 0.4.

5. The lead storage battery according to any one of claims 1 to 4, wherein the nonwoven fabric has a maximum pore size of 30 $\mu$m or smaller.

6. The lead storage battery according to any one of claims 1 to 5, wherein the nonwoven fabric has a maximum pore size of 0.5 $\mu$m or larger.

7. The lead storage battery according to any one of claims 1 to 6, wherein the thickness of the nonwoven fabric is 100 µm or larger.

8. The lead storage battery according to any one of claims 1 to 7, wherein the thickness of the nonwoven fabric is 100 µm to 1,300 µm.

9. The lead storage battery according to any one of claims 1 to 8, wherein the nonwoven fabric comprises an acrylic resin and/or a styrene resin.

10. The lead storage battery according to claim 9, wherein the acrylic resin and (or) the styrene resin comprise(s) a silane compound.

11. The lead storage battery according to claim 10, wherein the content of silicon (Si) in the silane compound is more than 0 parts by weight but 6 parts by weight or less with respect to 100 parts by weight of the acrylic resin and/or the styrene resin.

12. The lead storage battery according to any one of claims 1 to 11, wherein

the separator is a porous membrane, and
the porous membrane comprises at least one kind of ribs selected from the group consisting of serrated ribs, inclined ribs, broken ribs, linear ribs, embossments, projections, and a combination thereof.

13. The lead storage battery according to any one of claims 1 to 12, wherein the separator is in the form of an envelope, and houses the positive electrode or the negative electrode.

14. The lead storage battery according to any one of claims 1 to 13, wherein the separator houses the negative electrode.

15. The lead storage battery according to any one of claims 1 to 13, wherein the separator houses the positive electrode.

16. The lead storage battery according to any one of claims 1 to 15, wherein the fibers comprise organic fibers.

17. The lead storage battery according to any one of claims 1 to 16, wherein the filler comprises inorganic particles.

FIG. 1

FIG. 2

# FIG. 3

(a)                                    (b)

# FIG. 4

(a)                                    (b)

# FIG. 5

# FIG. 6

| | INTERNATIONAL SEARCH REPORT | International application No. |
|---|---|---|
| | | PCT/JP2021/011516 |

**A. CLASSIFICATION OF SUBJECT MATTER**
Int.Cl. H01M50/454(2021.01)i, H01M10/12(2006.01)i, H01M50/411(2021.01)i,
H01M50/414(2021.01)i, H01M50/42(2021.01)i, H01M50/44(2021.01)i,
H01M50/443(2021.01)i, H01M50/451(2021.01)i, H01M50/46(2021.01)i,
H01M50/463(2021.01)i, H01M50/466(2021.01)i, H01M50/489(2021.01)i
FI: H01M50/454, H01M10/12K, H01M50/411, H01M50/414, H01M50/42, H01M50/44,
H01M50/443M, H01M50/451, H01M50/46, H01M50/463B, H01M50/466, H01M50/489
According to International Patent Classification (IPC) or to both national classification and IPC

**B. FIELDS SEARCHED**

Minimum documentation searched (classification system followed by classification symbols)
Int.Cl. H01M50/454, H01M10/12, H01M50/411, H01M50/414, H01M50/42,
H01M50/44, H01M50/443, H01M50/451, H01M50/46, H01M50/463, H01M50/466,
H01M50/489

Documentation searched other than minimum documentation to the extent that such documents are included in the fields searched
Published examined utility model applications of Japan    1922–1996
Published unexamined utility model applications of Japan  1971–2021
Registered utility model specifications of Japan          1996–2021
Published registered utility model applications of Japan  1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2017-59480 A (GS YUASA INTERNATIONAL LTD.) 23 March 2017 (2017-03-23), paragraphs [0027], [0028], [0032], [0038], [0041]-[0051], table 2 | 1-9, 12-17<br>10-11 |
| Y<br>A | JP 2018-18800 A (GS YUASA INTERNATIONAL LTD.) 01 February 2018 (2018-02-01), paragraphs [0012]-[0015] | 1-9, 12-17<br>10-11 |
| Y<br>A | JP 2018-6258 A (ASAHI KASEI CORPORATION) 11 January 2018 (2018-01-11), paragraphs [0016], [0022]-[0029] | 1-9, 12-17<br>10-11 |
| A | JP 2018-18802 A (GS YUASA INTERNATIONAL LTD.) 01 February 2018 (2018-02-01), claim 1, paragraphs [0023], [0024], [0040]-[0046], [0063]-[0065], [0079] | 1-17 |

☒ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 May 2021 | 08 June 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2021/011516

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2018-18803 A (GS YUASA INTERNATIONAL LTD.) 01 February 2018 (2018-02-01), claim 1, paragraphs [0018], [0038]-[0044], [0061]-[0063] | 1-17 |
| A | JP 2013-206571 A (NIPPON SHEET GLASS CO., LTD.) 07 October 2013 (2013-10-07), claims 6, 8, paragraphs [0006], [0011]-[0015], [0021], [0028]-[0039] | 1-17 |
| A | JP 4-218259 A (SHIN KOBE ELECTRIC MACHINERY CO., LTD.) 07 August 1992 (1992-08-07), paragraphs [0003]-[0010], fig. 1-7 | 1-17 |
| A | US 2016/0344036 A1 (DARAMIC, LLC) 24 November 2016 (2016-11-24), fig. 1, 3 | 1-17 |
| A | JP 2005-197145 A (FURUKAWA BATTERY CO., LTD.) 21 July 2005 (2005-07-21), paragraphs [0005], [0006], [0013], [0024], [0025] | 1-17 |

Form PCT/ISA/210 (second sheet) (January 2015)

| JP 2017-59480 A | 23 March 2017 | EP 3352285 A1<br>paragraphs [0032], [0033],<br>[0040], [0047],<br>[0053]-[0063], table 2<br>KR 10-2018-0034660 A<br>CN 108028436 A |
| --- | --- | --- |
| JP 2018-18800 A | 01 February 2018 | (Family: none) |
| JP 2018-6258 A | 11 January 2018 | (Family: none) |
| JP 2018-18802 A | 01 February 2018 | (Family: none) |
| JP 2018-18803 A | 01 February 2018 | (Family: none) |
| JP 2013-206571 A | 07 October 2013 | (Family: none) |
| JP 4-218259 A | 07 August 1992 | US 5075183 A<br>column 1, line 19 to column 2,<br>line 53, fig. 1-7<br>EP 453292 A1<br>CA 2040673 A1 |
| US 2016/0344036 A1 | 24 November 2016 | (Family: none) |
| JP 2005-197145 A | 21 July 2005 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019087679 A


**Non-patent literature cited in the description**

- Polymer Handbook. John Wiley & Sons, Inc,